(19) Europäisches Patentamt
European Patent Office
Office européen des brevets

(11) **EP 4 722 173 A1**

(12) **EUROPÄISCHE PATENTANMELDUNG**

(43) Veröffentlichungstag:
**08.04.2026 Patentblatt 2026/15**

(21) Anmeldenummer: **24204003.8**

(22) Anmeldetag: **01.10.2024**

(51) Internationale Patentklassifikation (IPC):
**C03B 33/06** (2006.01)  **C03B 37/012** (2006.01)

(52) Gemeinsame Patentklassifikation (CPC):
**C03B 33/06; C03B 37/0122;** C03B 2203/02;
C03B 2203/14; C03B 2203/16; C03B 2203/42

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Heraeus Quarzglas GmbH & Co. KG
63450 Hanau (DE)**

(72) Erfinder:
• **ROSENBERGER, Manuel
63801 Kleinostheim (DE)**
• **TANSEL, Yusuf
63801 Kleinostheim (DE)**

• **WERNER, Jörg
63801 Kleinostheim (DE)**
• **PLASS, Jaqueline
63801 Kleinostheim (DE)**
• **SPIELMANN, Timo
63801 Kleinostheim (DE)**
• **VUKOJE, Davor
63801 Kleinostheim (DE)**
• **MÜLLER, Andreas
63801 Kleinostheim (DE)**

(74) Vertreter: **Heraeus IP
Heraeus Business Solutions GmbH
Intellectual Property
Heraeusstraße 12-14
63450 Hanau (DE)**

(54) **VORFORM FÜR ANTIRESONANTE HOHLKERNFASER SOWIE VERFAHREN ZUM TRENNEN EINER VORFORM MIT SOLLÄNGE**

(57) Beschrieben wird ein Verfahren zur Herstellung einer HCF-Vorform, in welchem Vorformlinge (Stacks) Heißformprozessschritten unterzogen, umso eine Vorform zu erhalten. Die Vorformen werden nach den Heißformprozessschritten mittels eines erfindungsgemäßen Annular Saw Cut Verfahrens so zugeschnitten, dass Ihre Endflächen wünschenswerte Eigenschaften für den Faserzug aufweisen.

FIG. 1

EP 4 722 173 A1

**Beschreibung**

**EINLEITUNG**

Die Erfindung betrifft ein Verfahren zur Herstellung einer HCF-Vorform. Dazu werden Vorformlinge (Stacks) Heißformprozessschritten unterzogen, umso eine Vorform zu erhalten. Die Vorformen werden nach den Heißformprozessschritten mittels eines erfindungsgemäßen Annular Saw Cut Verfahrens so zugeschnitten, dass Ihre Endflächen wünschenswerte Eigenschaften für den Faserzug aufweisen.

**HINTERGRUND DER ERFINDUNG UND STAND DER TECHNIK**

Bei der Herstellung von antiresonanten Hohlkernfasern ("antiresonant hollow-core fibers"; ARHCF) hat es sich gezeigt, dass deren Herstellung im industriellen Maßstab insbesondere dann möglich ist, wenn zunächst von Vorformen (Canes) mit deutlich größeren Ausmaßen als schließlich in der antiresonanten Hohlkernfaser, ausgegangen wird. Solche Vorformen bezeichnen rohrförmige Glaskörper, bei denen die Vorstufen der Bestandteile einer antiresonanten Hohlkernfaser, wie Hüll- oder Mantelrohr, diverse Kapillaren und/oder Antiresonanzelement-Vorformlinge, bereits ineinander fixiert sind.

Es ist dabei wünschenswert, wenn die Größenverhältnisse zwischen gläsernen Bestandteilen wie Hüll- und Mantelrohren, Kapillaren und/oder Antiresonanzelement-Vorformlingen sich zwischen Vorformen und der antiresonanten Hohlkernfaser nicht grundlegend ändern. Des Weiteren wirken während des Verformungsprozesses verschiedene Kräfte insbesondere auf Kapillaren und/oder Antiresonanzelement-Vorformlinge, sodass diese beschädigt oder auf unerwünschte Weise verformt werden können.

Solche Vorformen können aus Vorformlingen (Stacks) hergestellt werden. Dabei werden vorbereitete Zusammenschlüsse von einzelnen gläsernen Bestandteilen, die noch nicht vollständig aneinander fixiert sind, mittels Heißformprozesschritten aneinander fixiert.

Beim kontinuierlichen Ziehen von Vorformen aus einem Vorformling stellt sich das Problem, den Glasstrang in Teilstücke von geeigneter Länge abtrennen zu müssen. Dabei wird üblicherweise an der Außenhüllrohrfläche des sich in Richtung seiner Längsachse bewegenden Vorformlings zunächst eine Sollbruchstelle durch eine Verletzung der Außenhüllrohrfläche erzeugt, etwa durch einen Kratzer, einen Riss, einen Schnitt oder das gezielte Einbringen eines Spannungsrings, an dem anschließend der Glasstrang mittels Snap-Cuts gebrochen wird.

Im Snap-Cut Verfahren, bei dem größtenteils mit Brechen des Glaskörpers statt mit einem vollständigen Durchschnitt gearbeitet wird, soll das Eindringen von Schneidpartikeln oder ggf. Flüssigkeiten in den hohlen Kernbereich der abgetrennten Glaskörper vermieden werden.

Dieser Trennungsvorgang birgt jedoch stets das Risiko, zu Ausplatzungen am äußeren Rand und zu einer undefinierten oder schrägen und unebenen Endfläche der Vorform zu führen. Endflächen mit solchen Eigenschaften sind jedoch ungeeignet, um daran Verbindungssysteme anzubringen, die einen innseitigen Überdruck erzeugen können und gegebenenfalls nötig sind, um Antiresonanzelement-Vorformlinge während der weiteren Verformungsprozesse der Vorform zur antiresonanten Hohlkernfaser zu stabilisieren. Außerdem bleibt beim Snap-Cut das Risiko erhalten, dass unerwünschte Verunreinigungen in die hohlen Innenräume der Glaskörper eindringen können.

Im Stand der Technik sind bereits eine Reihe von Systemen bekannt, mit denen Glaskörper entlang einer induzierten Sollbruchstelle zum Beispiel mit einem Snap-Cut voneinander getrennt werden können.

In dem Dokument JP 2009-167040 A wird ein Verfahren zum Schneiden von Glaskörpern beschrieben, bei welchem der Glaskörper zunächst mittels einer geeigneten Anschneide- oder Anritzvorrichtung entlang der Schneidzone vorbehandelt wird. Anschließend wird die vorbehandelte Stelle mit einem Kühlmittel, wie beispielsweise flüssigem Stickstoff, kontaktiert und der Körper trennt sich.

In JP 2009-149482 A wird ein weiteres Verfahren zum Schneiden von rohrförmigen Glaskörpern beschrieben. Der Glaskörper wird dabei zuerst entlang der gewünschten Trennzone vorbehandelt, z. B. mittels Rotation entlang einer Anritz- bzw. Anschneidevorrichtung. Daraufhin wird in dem rohrförmigen Glaskörper ein Überdruck angelegt, welcher dafür sorgt, dass sich der Körper trennt.

US 2008/0202298 A betrifft ein Verfahren zum Schneiden eines Glaskörpers. Darin wird zunächst mit einer geeigneten Schneidevorrichtung eine Trennzone auf dem Glaskörper eingeritzt. Anschließend wird die Trennzone mit einer Mischung aus verschiedenen Säuren wie HF, HCl und $HNO_3$ behandelt. Danach kann der Glaskörper schließlich getrennt werden, indem eine mechanische Spannung ausgeübt wird.

JP 2009-126757 A beschreibt ein Verfahren zum Schneiden von rohrförmigen Glaskörpern. Dabei wird mittels einer geeigneten Schneid- oder Anritzvorrichtung zunächst eine Trennzone vorbereitet. Anschließend wird der rohrförmige Glaskörper innseitig auf Temperaturen von 900 °C bis 1600 °C erhitzt und die Trennung des Körpers so induziert.

In WO 2021/123738 A wird ein Verfahren zur Separation eines Glaskörpers beschrieben. Dabei wird ein Glaskörper an einer zuvor festgelegten Stelle mittels eines Laser- oder Plasmastrahls oder durch eine gerichtete Flamme erhitzt. Durch die so erhitzte Stelle wird es möglich, einen Teil des Glaskörpers zu separieren.

WO 2014/048004 A beschreibt eine Methode, um Glaskörper zu schneiden, indem mit einem Laser zunächst die Schnittstelle vorbehandelt wird. Anschließend wird der Glaskörper mithilfe einer pneumatischen Vorrichtung entlang der vorbehandelten Stelle zertrennt. Des Weiteren wird eine Vorrichtung beschrieben, die zur Ausübung des Verfahrens geeignet ist.

Das Dokument JP 2018-080091 A beschreibt ein Verfahren, um einen rohrförmigen Glaskörper zu schneiden. Dabei wird in den Glaskörper entlang seines Umfangs mit einer Sägevorrichtung ein Defekt eingesägt, ohne dass eine vollständige Abtrennung erfolgt. Der so entstandene Defekt wird dazu genutzt, einen separierten Teil des Glaskörpers durch eine Krafteinwirkung zu erhalten.

Ein weiteres Verfahren zur Herstellung von gläsernen Vorformen einer vorbestimmten Länge wird in WO 2016/114779 A dargelegt. In einem Glaskörper wird dafür zunächst mit einer Luftsäge oder einem abrasiven Rad eine Kerbe induziert. Es wird anschließend eine Zugspannung angelegt und die Vorform mit den vorbestimmten Längeneigenschaften durch Separation vom Glaskörper erhalten.

In der Druckschrift JP 2012-025594 A wird ein Verfahren zum Schneiden von Glaskörpern beschrieben. Ein Scheibenschneider mit einer Klinge wird verwendet, um den Glaskörper entlang der Abtrennstelle einzuschneiden. Gleichzeitig wird eine vertikal gerichtete Zugkraft auf den Glaskörper angewendet, welche mit fortlaufendem Schneidevorgang verringert wird.

Das Dokument DE 10 2006 012 582 A1 beschreibt eine Vorrichtung und ein Verfahren zum Abtrennen von Abschnitten von rohrförmigen Glaskörpern. Zunächst wird mithilfe eines Ritzrades eine Trennzone vorbereitet. Der angeritzte Glaskörper wird mit einer Abbrechvorrichtung zertrennt.

In der Druckschrift WO 03/029155 A wird eine Vorrichtung sowie ein Verfahren zum Trennen eines Glasstrangs bei einem Ziehvorgang offengelegt. Auf einem Glasstrang wird mittels eines Schneidewerkzeugs eine Sollbruchstelle angetragen. Anschließend wird eine Biegevorrichtung, welche ein Biegemoment erzeugt, dazu verwendet, kontinuierlich auf den Glasstrang einzuwirken, sodass er getrennt wird.

In JPH 11-343134 A wird ein Verfahren zur Trennung von Glaskörpern beschrieben. Dabei wird eine Schneidevorrichtung von außen an einen Glaskörper gepresst. Daraufhin wird der Glaskörper rotiert und gegen die Schneidevorrichtung gepresst, bis der Körper getrennt wird.

WO 2017/186246 A offenbart ein Verfahren zur Herstellung einer mikrostrukturierten optischen Faser. Dabei wird in einer Vorform, welche durchgehende Längskanäle aufweist, ein Überdruck angelegt, um während des Faserzugs die Geometrie dieser Kanäle zu stabilisieren. Dazu werden als "Druckrohre" bezeichnete Gaseinleitungsrohre mit der Vorform verbunden.

Die Druckschrift WO 2021/110338 A betrifft einen Anschluss mit dem eine Vorform für eine Antiresonante Hohlkernfaser an einen Druckregler angeschlossen werden kann und eine Methode, einen solchen Druckanschluss mit der Vorform zu verbinden. Dazu ist es erforderlich, dass die Anschlussfläche des Glaskörpers mittels eines geeigneten Dichtungsmittels gasdicht mit dem Anschluss verbunden werden kann.

## AUFGABE DER ERFINDUNG

Die Aufgabe der Erfindung ist es einen Abtrennungsprozess für Vorformen für antiresonante Hohlkernfasern bereitzustellen, mit dem im industriell relevanten Maßstab produziert werden kann. Das bedeutet, dass erfindungsgemäße Verfahren muss eine hohe Produktionsrate an qualitativ konstanten Produkten gewährleisten.

Die Aufgabe der Erfindung wurde zum einen dadurch gelöst, dass es den Erfindern überraschend gelungen ist, einen Abtrennprozess für Vorformen und antiresonante Hohlkernfasern bereitzustellen, der nicht zur Verunreinigung der hohlen Innenräume der Vorformen oder antiresonanten Hohlkernfasern führt.

Zum anderen wird durch die vorliegende Erfindung ein Verfahren bereitgestellt, mit welchem Vorformen für antiresonante Hohlkernfasern so geschnitten werden können, dass sie zuverlässig mit Endflächen ausgestattet sind, die eine Verbindung mit Drucksystemen ermöglichen. Dadurch kann an die Vorformen in weiteren Prozessschritten innseitig ein Druck angelegt werden, wodurch die Antiresonanzelement-Vorformlinge in den Vorformen bei der Verarbeitung zur antiresonanten Hohlkernfaser geometrisch stabilisiert werden können. Dadurch wird eine qualitativ konstante Produktion mit hoher Produktivität gewährleistet.

Überraschenderweise ist es den Erfindern der vorliegenden Erfindung gelungen beide Anforderungen zu erfüllen, indem sie die Vorformen mittels eines umfänglich umlaufenden Einschnitts, der die Vorform jedoch nicht vollständig durchtrennt, sondern einen Teil des Glaskörpers intakt lässt, vorbereiten und anschließend mittels Krafteinwirkung das Abtrennen vervollständigen.

## KURZBESCHREIBUNG DER ERFINDUNG

[1] Verfahren zur Herstellung von Vorformen für antiresonante Hohlkernfasern die

a) einen Glaskörper mit Hohlstrukturen, mit einer Glaskörper-Innenbohrung und einer Glaskörper-Längsachse, entlang der sich eine von einer Innenglaskörperfläche und einer Außenglaskörperfläche begrenzte Glaskörper-Wandung erstreckt umfassen, und
b) Antiresonanzelement-Vorformlinge umfassen, und worin

Glaskörper und Antiresonanzelement-Vorformling anteilig oder vollständig aneinander fixiert sind,

entsprechend einer Solllänge, umfassend die mindestens einmalig ausgeführten Verfahrensschritte:

i) umfänglich umlaufendes Einschneiden einer Solltrennstelle auf der Außenglaskörperfläche ohne, dass die Glaskörper-Wandung vollständig durchdrungen wird und ohne, dass die Vorform vollständig abgetrennt wird, mittels einer geeigneten Schneidevorrichtung, und
ii) Ausüben einer Krafteinwirkung auf den Glaskörper bis zum Abbruch einer Vorform mit Solllänge entlang der Solltrennstelle mittels einer geeigneten Vorrichtung.

[2] Verfahren gemäß [1], dadurch gekennzeichnet, dass der Glaskörper während des Einschneidens rotiert wird oder, dass nacheinander rotiert und eingeschnitten wird.

[3] Verfahren gemäß [1] und [2], dadurch gekennzeichnet, dass die Schneidevorrichtung mechanische Schneidevorrichtungen oder hochenergetische Schneidevorrichtungen umfasst.

[4] Verfahren gemäß [3], dadurch gekennzeichnet, dass mechanische Schneidevorrichtungen Sägen, insbesondere Kreissägen und Bandsägen, Trennschleifer oder Wasserstrahlschneider umfassen.

[5] Verfahren gemäß [3], dadurch gekennzeichnet, dass hochenergetische Schneidevorrichtungen Laserschneider, Plasmaschneider oder Brennschneider umfassen.

[6] Verfahren gemäß [1] bis [5], dadurch gekennzeichnet, dass der umfänglich umlaufende Einschnitt in einem Winkel von 85° bis 95°, bevorzugt in einem Winkel von 90° zu der Glaskörper-Längsachse erfolgt.

[7] Verfahren gemäß [1] bis [6], dadurch gekennzeichnet, dass der umfänglich umlaufende Einschnitt eine Einschnittbreite aufweist, die der Breite des Schneideelements der Schneidevorrichtung entspricht.

[8] Verfahren gemäß [1] bis [7], dadurch gekennzeichnet, dass der umfänglich umlaufende Einschnitt einen Restglaskörper mit einer Restglaskörper-Wandungsstärke ($d_{ASC}$ *distance annular-saw-cut* [mm]) hinterlässt.

[9] Verfahren gemäß [1] bis [8], dadurch gekennzeichnet, dass die Restglaskörper-Wandungsstärke $d_{ASC}$ sich aus dem Halben der Differenz zwischen dem Außendurchmesser des Restglaskörpers ($OD_{res}$ *outer diameter residue glass* [mm]) und dem Durchmesser der Hohlstruktur des Glaskörpers ($ID_{pre}$ *inner diameter preform* [mm]) nach der folgenden Formel ergibt:

$$d_{ASC} = \frac{OD_{res} - ID_{pre}}{2}$$

[10] Verfahren gemäß [1] bis [9], dadurch gekennzeichnet, dass der Außendurchmesser des Restglaskörpers $OD_{res}$ kleiner ist als der Außendurchmesser des Glaskörpers $OD_{pre}$.

[11] Verfahren gemäß [1] bis [10], dadurch gekennzeichnet, dass sich die Einschnitttiefe des umfänglich umlaufenden Einschnitts ($d_{cut}$ *distance cut* [mm]) aus dem Halben der Differenz zwischen dem Außendurchmesser des Glaskörpers ($OD_{pre}$ *outer diameter preform* [mm]) und dem Außendurchmesser des Restglaskörpers $OD_{res}$ nach der folgenden Formel ergibt:

$$d_{cut} = \frac{OD_{pre} - OD_{res}}{2}$$

[12] Verfahren gemäß [1] bis [11], dadurch gekennzeichnet, dass die Einschnitttiefe des umfänglich umlaufenden Einschnitts $d_{cut}$ geringer ist als die Glaskörper-Wandungsstärke ($d_{pre}$ *distance preform wall* [mm]).

[13] Verfahren gemäß [1] bis [12], dadurch gekennzeichnet, dass das Verhältnis zwischen der Einschnitttiefe des umfänglich umlaufenden Einschnitts $d_{cut}$ und der Restglaskörper-Wandungssträke $d_{ASC}$ zwischen 15,0 und 0,1, bevorzugt zwischen 10,0 und 0,5, beträgt.

[14] Verfahren gemäß [1] bis [13], dadurch gekennzeichnet, dass das Verhältnis zwischen der Querschnittsfläche des umfänglich umlaufenden Einschnitts $CSA_{cut}$ *(Cross-Section-Area cut* [mm$^2$]) und der Querschnittsfläche der Restglaskörpers $CSA_{ASC}$ (*Cross-Section-Area Annular-Saw-Cut* [mm$^2$]) zwischen 35,0 und 0,5, bevorzugt zwischen 20,0 und 0,5 beträgt.

[15] Verfahren gemäß [1] bis [14], dadurch gekennzeichnet, dass nach Schritt i) zumindest eine zusätzliche Kerbe entlang der Solltrennstelle eingefügt wird.

[16] Verfahren gemäß [15], dadurch gekennzeichnet, dass die zusätzliche Kerbe mit derselben oder einer anderen Schneidevorrichtung wie der umfänglich umlaufende Einschnitt eingefügt wird.

[17] Verfahren gemäß [15] und [16], dadurch gekennzeichnet, dass die Kerbe eine größere Einschnitttiefe als der umfänglich umlaufende Einschnitt ausweist.

[18] Verfahren gemäß [15] bis [17], dadurch gekennzeichnet, dass die Einschnitttiefe der Kerbe 0,01 bis 1,50 mal tiefer ist, als die Einschnitttiefe des umfänglich umlaufenden Einschnitts.

[19] Verfahren gemäß [1] bis [18], dadurch gekennzeichnet, dass die Kerbe eine Länge aufweist, die einem Anteil von 0,2 bis 1,7 des Radius des Glaskörpers entspricht.

[20] Verfahren gemäß [1] bis [19], dadurch gekennzeichnet, dass die Fixierung der Antiresonanzelement-Vorformlinge in den Glaskörpern entweder vollständig erfolgt oder die Fixierung der Antiresonanzelement-Vorformlinge in den Glaskörpern anteilig an den Stellen, an denen der umfänglich umlaufende Einschnitt erfolgen soll, vorgenommen wird.

[21] Verfahren gemäß [1] bis [20], dadurch gekennzeichnet, dass vor Schritt i) die vorhandene Endfläche des Glaskörpers wasserdicht verschlossen wird.

[22] Verfahren gemäß [1] bis [21], dadurch gekennzeichnet, dass die auf den eingeschnittenen Glaskörper ausgeübte Krafteinwirkung durch Ausüben einer Zugspannung, einer Torsionskraft oder einer Biegung des Glaskörpers ausgeübt wird, bevorzugt mittels Ausübens einer Zugspannung oder einer Torsionskraft ausgeübt wird.

[23] Verfahren gemäß [1] bis [22], dadurch gekennzeichnet, dass die Querschnittsfläche des umfänglich umlaufenden Einschnitts $CSA_{cut}$ eine Oberflächenrauhigkeit aufweist, bei welcher die mittlere arithmetische Höhe Sa nicht mehr als 2,000 $\mu$m beträgt.

[24] Verfahren gemäß [1] bis [23], dadurch gekennzeichnet, dass die Querschnittsfläche des umfänglich umlaufenden Einschnitts $CSA_{cut}$ eine Oberflächenrauhigkeit aufweist, bei welcher die maximale Höhe Sz nicht mehr als 25,000 $\mu$m beträgt.

[25] Verfahren gemäß [1] bis [24], dadurch gekennzeichnet, dass die Querschnittsfläche des umfänglich umlaufenden Einschnitts $CSA_{cut}$ eine Oberflächenrauhigkeit aufweist, bei welcher das Seitenverhältnis der Oberflächentextur *Str* nicht mehr als 0,400 beträgt.

[26] Verfahren gemäß [1] bis [25], dadurch gekennzeichnet, dass die Querschnittsfläche des umfänglich umlaufenden Einschnitts $CSA_{cut}$ eine Oberflächenrauhigkeit aufweist, bei welcher der arithmetische Mittelwert der Spitzenkrümmung *Spc* nicht weniger als 1000,000 mm$^{-1}$ beträgt.

[27] Verfahren gemäß [1] bis [26], dadurch gekennzeichnet, dass die Querschnittsfläche des umfänglich umlaufenden Einschnitts $CSA_{cut}$ eine Oberflächenrauhigkeit aufweist, bei welcher das entwickelte Grenzflächenverhältnis *Sdr* nicht mehr als 0,3000 beträgt.

[28] Verfahren gemäß [23] bis [27], dadurch gekennzeichnet, dass die Oberflächenrauhigkeitsparameter mittels der 3D Laserscanning-Mikroskopie bestimmt werden.

[29] Verfahren gemäß [1] bis [28], dadurch gekennzeichnet, dass nach dem Abtrennen der Vorform die abgetrennte Endfläche der Antiresonanzelement-Vorformlinge höchstens bis zur Schnittbreite des umfänglich umlaufenden Einschnitts, bevorzugt aber 0,00 mm, über die Querschnittsfläche des umfänglich umlaufenden Einschnitts $CSA_{cut}$ des Glaskörpers hinausragt.

[30] Verfahren gemäß [1] bis [28], dadurch gekennzeichnet, dass nach dem Abtrennen der Vorform die Querschnittsfläche des umfänglich umlaufenden Einschnitts $CSA_{cu}$ des Glaskörpers höchstens 1,00 mm, bevorzugt aber 0,00 mm, über die abgetrennte Endfläche der Antiresonanzelement-Vorformlinge hinausragt.

[31] Verfahren gemäß [1] bis [30], dadurch gekennzeichnet, dass nach dem Abtrennen der Vorform die Querschnittsfläche des umfänglich umlaufenden Einschnitts $CSA_{cu}$ höchstens 1,00 mm, bevorzugt aber 0,00 mm, über die Querschnittsfläche des Restglaskörpers $CSA_{ASC}$ hinausragt.

[32] Verfahren gemäß [1] bis [30], dadurch gekennzeichnet, dass nach dem Abtrennen der Vorform die Querschnittsfläche des Restglaskörpers $CSA_{ASC}$ höchstens bis zur Schnittbreite des umfänglich umlaufenden Einschnitts, bevorzugt aber 0,00 mm, mm über die Querschnittsfläche des umfänglich umlaufenden Einschnitts $CSA_{cut}$ hinausragt.

[33] Verfahren gemäß [1] bis [32], dadurch gekennzeichnet, dass von dem Glaskörper unter Anwendung der Verfahrensschritte i) und ii) ein endständiges Randstück mit einer Länge zwischen 15 mm und 75 mm entfernt wird.

[34] Verfahren zum Abtrennen von Vorformen für die Herstellung von antiresonanten Hohlkernfasern gemäß [1] bis [33], umfassend die mindestens einmalig ausgeführten Verfahrensschritte:

i) wasserdichtes Verschließen der Endfläche, und
ii) umfänglich umlaufendes Einschneiden einer Solltrennstelle auf der Außenglaskörperfläche ohne, dass die Glaskörper-Wandung vollständig durchdrungen wird und ohne, dass die Vorform vollständig abgetrennt wird, mittels einer Säge, und optional
iii) Anbringen mindestens einer zusätzlichen Kerbe entlang der Solltrennstelle, indem mit dem rotierenden Sägeblatt ein Stück das 0,01 bis 1,50 mal tiefer als die Solltrennstelle ist und einer Länge von 0,2 bis 1,7 mal dem Radius des Glaskörpers entspricht, ausgesägt wird, und
iv) Ausüben einer Krafteinwirkung auf den Glaskörper bis zum Abbruch einer Vorform mit Solllänge entlang der Solltrennstellestelle mittels einer Zugspannung oder einer Torsionskraft.

[35] Vorform in Solllänge für die Herstellung einer antiresonanten Hohlkernfaser, dadurch gekennzeichnet, dass sie mindestens eine mit einem Druckanschluss kompatible Endfläche aufweist, die eine Querschnittsfläche des umfänglich umlaufenden Einschnitts $CSA_{cut}$ *(Cross-Section-Area cut* [mm$^2$]), eine Querschnittsfläche des Restglaskörpers $CSA_{ASC}$ *(Cross-Section-Area Annular-Saw-Cut* [mm$^2$]) und eine Endfläche von Antiresonanzelement-Vorformlingen umfasst.

[36] Vorform gemäß [35], dadurch gekennzeichnet, dass die Oberflächeneigenschaften der Querschnittsfläche des umfänglich umlaufenden Einschnitts $CSA_{cut}$ und die Oberflächenbeschaffenheit der Querschnittsfläche des Restglaskörpers $CSA_{ASC}$ unterschiedlich sind.

[37] Vorform gemäß [35] und [36], dadurch gekennzeichnet, dass die Querschnittsfläche des umfänglich umlaufenden Einschnitts $CSA_{cut}$ eine Oberflächenrauhigkeit aufweist, bei welcher die mittlere arithmetische Höhe Sa nicht mehr als 2,000 µm, bestimmt mit der Methode auf [28], beträgt.

[38] Vorform gemäß [35] bis [37], dadurch gekennzeichnet, dass die Querschnittsfläche des umfänglich umlaufenden Einschnitts $CSA_{cut}$ eine Oberflächenrauhigkeit aufweist, bei welcher die maximale Höhe Sz nicht mehr als 25,000 µm, bestimmt mit der Methode auf [28], beträgt.

[39] Vorform gemäß [35] bis [38], dadurch gekennzeichnet, dass die Querschnittsfläche des umfänglich umlaufenden Einschnitts $CSA_{cut}$ eine Oberflächenrauhigkeit aufweist, bei welcher das Seitenverhältnis der Oberflächentextur *Str* nicht mehr als 0,400, bestimmt mit der Methode auf [28], beträgt.

[40] Vorform gemäß [35] bis [39], dadurch gekennzeichnet, dass die Querschnittsfläche des umfänglich umlaufenden Einschnitts $CSA_{cut}$ eine Oberflächenrauhigkeit aufweist, bei welcher der arithmetische Mittelwert der Spitzenkrümmung $Spc$ nicht weniger als 1000,000 mm$^{-1}$, bestimmt mit der Methode auf [29], beträgt.

[41] Vorform gemäß [35] bis [40], dadurch gekennzeichnet, dass die Querschnittsfläche des umfänglich umlaufenden Einschnitts $CSA_{cut}$ eine Oberflächenrauhigkeit aufweist, bei welcher das entwickelte Grenzflächenverhältnis $Sdr$ nicht mehr als 0,3000, bestimmt mit der Methode auf [28], beträgt.

[42] Vorform gemäß [35] bis [41], dadurch gekennzeichnet, dass die Endfläche der Antiresonanzelement-Vorformlinge bis zur Schnittbreite des umfänglich umlaufenden Einschnitts, bevorzugt aber 0,00 mm über die Querschnittsfläche des umfänglich umlaufenden Einschnitts $CSA_{cut}$ des Glaskörpers hinausragt.

[43] Vorform gemäß [35] bis [42], dadurch gekennzeichnet, dass die Querschnittsfläche des umfänglich umlaufenden Einschnitts $CSA_{cut}$ des Glaskörpers höchstens 1,00 mm, bevorzugt aber 0,00 mm, über die Endfläche der Antiresonanzelement-Vorformlinge hinausragt.

[44] Vorform gemäß [35] bis [43], dadurch gekennzeichnet, dass die Querschnittsfläche des umfänglich umlaufenden Einschnitts $CSA_{cut}$ höchstens 1,00 mm, bevorzugt aber 0,00 mm, über die Querschnittsfläche des Restglaskörpers $CSA_{ASC}$ hinausragt.

[45] Vorform gemäß [35] bis [44], dadurch gekennzeichnet, dass nach dem Abtrennen der Vorform die Querschnittsfläche des Restglaskörpers $CSA_{ASC}$ höchstens bis zur Schnittbreite des umfänglich umlaufenden Einschnitts, bevorzugt aber 0,00 mm über die Querschnittsfläche des umfänglich umlaufenden Einschnitts $CSA_{cut}$ hinausragt.

[46] Vorform für die Herstellung einer antiresonanten Hohlkernfaser, erhältlich gemäß einem Verfahren nach [1] bis [35].

[47] Baueinheit für die Herstellung einer antiresonanten Hohlkernfaser, umfassend einer Vorform gemäß [35] bis [46] und eines gasdichten Druckanschlusses.

## DETAILLIERTE BESCHREIBUNG DER ERFINDUNG

Die vorliegende Erfindung wird wie folgt im Detail beschrieben:

## I. Definitionen

Im Sinne der vorliegenden Erfindung bezeichnet der Begriff *umfänglich umlaufender Einschnitt* das erfindungsgemäß mittels einer geeigneten Schneidevorrichtung ausgeführte Einschneiden eines *Glaskörpers.* Dabei wird entweder eine Schneidevorrichtung umlaufend entlang des Umfangs eines fixierten *Glaskörpers* geführt, um so einen entlang des Umfangs des *Glaskörpers* abschließenden Einschnitt zu erzeugen oder der *Glaskörper* wird entlang einer fixierten Schneidevorrichtung rotiert, sodass ein Einschnitt entsteht, der entlang des Umfangs des *Glaskörpers* abschließend ist. Es ist ebenfalls möglich, dass sowohl die Schneidevorrichtung als auch der *Glaskörper* rotiert werden. Im Sinne der Erfindung wird die Tiefe des *umfänglich umlaufenden Einschnitts* als $d_{cut}$ (*distance cut* [mm]) bezeichnet und sie hinterlässt die abgetrennte Querschnittsfläche des *umfänglich umlaufenden Einschnitts* $CSA_{cut}$ (*Cross-Section-Area cut* [mm$^2$]). In Fällen, in denen entweder der *Glaskörper,* die Schneidevorrichtung oder beide rotiert werden, erhält der *umfänglich umlaufende Einschnitt* die Form eines kreisrunden Einschnitts. Das bedeutet, $d_{cut}$ ist an jeder Stelle des *umfänglich umlaufenden Einschnitts* gleich. Die Querschnittsfläche des *umfänglich umlaufenden Einschnitts* $CSA_{cut}$ ist in so einem Fall als eine Hohlkreisfläche beschreibbar. Es ist jedoch auch denkbar den *umfänglich umlaufenden Einschnitt,* der ein entlang des Umfangs des *Glaskörpers* abschließender Einschnitt ist, so auszuführen, dass andere geometrische Hohlformen als der Hohlkreis erhalten werden. Dabei sind alle Arten hohler Polygone denkbar, insbesondere auch solche Polygone, bei denen eine oder mehrere der Kanten eine Rundung aufweisen. Solche Formen kommen erfindungsgemäß beispielsweise insbesondere dann zustande, wenn mindestens eine optionale Kerbe an den Glaskörper aufgebracht wird.

Im Sinne der vorliegenden Erfindung bezeichnet der Begriff *Kollabieren* einen Vorgang, bei welchem die Geometrie eines *Halbzeugs* insoweit verändert wird, dass sich Außen- und Innendurchmesser verringern. Beispielsweise fällt dabei ein rohrförmiges *Halbzeug* also kontrolliert in sich zusammen, wird kontrolliert *kollabiert.* Üblicher-, aber nicht notwendigerweise, werden *Kollabierungsschritte* gemeinsam mit *Elongierungsschritten* und/oder auch mit *Aufkollabierungsschritten* unter Einwirkungen von Temperatur und gegebenenfalls Unterdruck ausgeführt.

7

Im Sinne der vorliegenden Erfindung bezeichnet der Begriff *Elongieren* einen Vorgang, bei welchem die Geometrie eines *Halbzeugs* insoweit verändert wird, dass die Länge vergrößert wird. *Elongierungsschritte* können nicht ohne *Kollabieren* der *Halbzeuge* im Sinne der Erfindung erfolgen. Sie können gegebenenfalls ebenfalls parallel zu Aufkollabierungsschritten erfolgen. *Elongierungsschritte* werden unter Einwirkungen von Temperatur und gegebenenfalls Druck ausgeführt.

Im Sinne der vorliegenden Erfindung bezeichnet der Begriff *Aufkollabieren* einen Vorgang, bei welchem ein erstes rohrförmiges *Halbzeug* mit einem kleineren Außendurchmesser in einem zweiten rohrförmigen *Halbzeug* mit einem Innendurchmesser, der größer ist als der Außendurchmesser des ersten *Halbzeugs* platziert und anschließend verbunden wird. Dies wird im Allgemeinen erreicht, indem der Außen- und Innendurchmesser des zweiten *Halbzeugs* verringert wird, wodurch das zweite *Halbzeug* auf das erste *Halbzeug* aufkollabiert wird. Üblicher-, aber nicht notwendigerweise, werden *Aufkollabierungsschritte* gemeinsam mit *Kollabierungs-* und/oder *Elongierungsschritten* unter Einwirkungen von Temperatur und gegebenenfalls Unterdruck ausgeführt.

Im Sinne der vorliegenden Erfindung bezeichnet der Begriff *Faserziehen* oder *Faserzug* jenen erfindungsgemäßen Schritt, bei dem aus einem *Halbzeug* eine antiresonante Hohlkernfaser gezogen wird. Erfindungsgemäß wird während dieses Schrittes gleichzeitig sowohl *elongiert* als auch *kollabiert.* Es ist prinzipiell möglich, den *Faserzug* ausgehend von *primären Vorformlingen* bzw. *Stacks* oder *Vorformen* umfassend mindestens einem *Hüll-* oder mindestens einem *Mantelrohr* auszuführen. Bevorzugt wird der *Faserzug* im Sinne der Erfindung mit *Baueinheiten* oder mit *finalen Vorformen* ausgeführt. Der *Faserzug* zeichnet sich durch eine hohe Zuggeschwindigkeit aus.

Im Sinne der vorliegenden Erfindung ist der Begriff *Halbzeug* ein Sammelbegriff, welcher jedes erfindungsgemäße Zwischenprodukt, das innerhalb eines erfindungsgemäßen Verfahrensschrittes zu einer antiresonanten Hohlkernfaser weiterverarbeitet werden kann, umfasst.

Im Sinne der vorliegenden Erfindung bezeichnet der Begriff *Kapillaren* rohrförmige Körper, die üblicherweise aus Glas bestehen. Die *Kapillaren* im Sinne der Erfindung weisen eine *Kapillar*-Innenbohrung und eine Kapillar-Längsachse auf entlang der sich eine von einer Innenkapillarfläche und einer Außenkapillarfläche begrenzte Kapillar-Wandung erstreckt. Der Begriff *Kapillaren* im Sinne der Erfindung bezeichnet ausschließlich einzelne Rohreinheiten. Einerseits können *Kapillaren* einzeln zum Beispiel im Zuge des erfindungsgemäßen Verfahrens in einem *Hüllrohr* fixiert und zu einem *Antiresonanzelement* weiterverarbeitet werden. Andererseits können *Kapillaren* beispielsweise zunächst ineinander platziert und gegebenenfalls fixiert werden, zum Beispiel im *nested-Design,* sodass mindestens eine Innenkapillarfläche der einen *Kapillare* die Außenkapillarfläche der anderen *Kapillare* berührt, wodurch ein *Antiresonanzelement-Vorformling* umfassend *Kapillaren,* die im *nested-Design* angeordnet sind, erhalten wird.

Im Sinne der vorliegenden Erfindung bezeichnet der Begriff *Antiresonanzelement-Vorformling* solche Bestandteile der gemäß dem erfindungsgemäßen Verfahren hergestellten antiresonanten Hohlkernfasern, die im Laufe des Verfahrens zu *Antiresonanzelementen* der antiresonanten Hohlkernfasern werden. Damit können beispielsweise *Kapillaren,* ineinander platzierte *Kapillaren* im *nested-Design,* wobei die *Kapillaren* noch nicht aneinander fixiert sind, oder auch ineinander platzierte *Kapillaren* im *nested-Design,* wobei die *Kapillaren* bereits aneinander fixiert sind, umfasst sein. Es ist im Sinne der Erfindung ebenfalls denkbar andere, mögliche Anordnungen von einzelnen oder mehreren *Kapillaren,* die in einer Innenhüllrohrseite platziert und zu einem *Antiresonanzelement* weiterverarbeitet werden, als *Antiresonanzelement-Vorformling* zu bezeichnen. Damit dient der Begriff *Antiresonanzelement-Vorformling* also als Sammelbegriff für jedes Element welches in der antiresonanten Hohlkernfaser ein *Antiresonanzelement* darstellt. Die *Antiresonanzelement-Vorformlinge* können ihre Form, wie beispielsweise ihren Außen- oder Innendurchmesser oder ihre Länge, noch ändern. Damit werden auch solche *Antiresonanzelement-Vorformlinge* von dem Begriff umfasst, die bereits mindestens einem Verarbeitungsschritt unterzogen wurden, aber ihre finale Form als *Antiresonanzelement* noch nicht erlangt haben.

Im Sinne der vorliegenden Erfindung bezeichnet der Begriff *nested-Design* eine besondere Anordnung von *Kapillaren* bzw. eine Art wie mindestens zwei *Kapillaren* einen *Antiresonanzelement-Vorformling* bilden können. Dabei werden mindestens zwei *Kapillaren* so angeordnet, dass die eine *Kapillare* so in einer anderen *Kapillare* platziert wird, das die Außenkapillarfläche der einen *Kapillare* mit der Innenkapillarfläche der anderen *Kapillare* in Berührung kommt. Prinzipiell können beliebig viele *Kapillaren* im *nested-Design* angeordnet werden, um einen *Antiresonanzelement-Vorformling* im Sinne der Erfindung, umfassend *Kapillaren,* die im *nested-Design* angeordnet sind, zu formen. Solche im *nested-Design* angeordneten *Antiresonanzelement-Vorformlinge* können beispielsweise in einer Form vorliegen, in welcher die *Kapillaren* lediglich ineinander platziert sind. In dieser Form können Sie anschließend in einem *Hüllrohr* platziert und erfindungsgemäß weiterverarbeitet werden. Dabei werden die so angeordneten *Kapillaren* dann aneinander und/oder am *Hüllrohr* fixiert. Es ist ebenfalls denkbar, dass die *Kapillaren,* die im *nested-Design* angeordnet einen *Antiresonanzelement-Vorformling* bilden, bereits aneinander fixiert werden, bevor sie in einem *Hüllrohr* platziert oder fixiert werden.

Im Sinne der vorliegenden Erfindung bezeichnet der Begriff *Antiresonanzelement* die finale Form der *Antiresonanzelement-Vorformlinge* nach der Durchführung aller Verfahrensschritte die zur Fertigung einer antiresonanten Hohlkernfaser aus den oben definierten Halbzeugen nötig sind, so wie sie in der fertigen antiresonanten Hohlkernfaser vorliegen. Das bedeutet, dass *Antiresonanzelement-Vorformlinge,* wie *Kapillaren* oder *Kapillaren,* die beispielsweise in einem *nested-Design* angeordnet worden sind, in der Form von *Antiresonanzelementen,* ihre geometrischen Merkmale, wie zum Beispiel Innen- oder Außendurchmesser, oder ihre Länge, nicht mehr durch weitere Verfahrensschritte verändern.

Im Sinne der vorliegenden Erfindung bezeichnet der Begriff *Glaskörper mindestens* ein *Hüllrohr* Es ist aber ebenfalls erfindungsgemäß mit dem Begriff Glaskörper einen Verbund aus mehreren *Hüllrohren* oder aus *Hüll-* und *Mantelrohren* zu bezeichnen. Damit ist von dem Begriff Glaskörper jeder Verbund von einem oder mehreren Hüll- und Mantelrohren umfasst, wie sie in erfindungsgemäßen *Vorformen* oder von *primären Vorformlingen* vorliegen. Das bedeutet, mit dem Begriff *Glaskörper* werden alle Systeme umfasst, die mindestens ein *Hüllrohr,* optional mindestens ein *Mantelrohr und* mindestens einen *Antiresonanzelement-Vorformling* umfassen.

Im Sinne der vorliegenden Erfindung bezeichnet der Begriff *Hüllrohr* ein Objekt, welches eine Hüllrohr-Innenbohrung und eine Hüllrohr-Längsachse aufweist, entlang der sich eine von einer Innenhüllrohrfläche und einer Außenhüllrohrflache begrenzte Hüllrohr-Wandung erstreckt. Das *Hüllrohr* im Sinne der Erfindung ist neben den *Antiresonanzelement-Vorformlingen* Bestandteil von *primären Vorformlingen (Stacks).* In *Vorformen* sind die *Antiresonanzelement-Vorformlinge* an dem mindestens einen *Hüllrohr* fixiert.

Im Sinne der vorliegenden Erfindung bezeichnet der Begriff *primärer Vorformling* oder "*Stack"* ein solches *Halbzeug,* bei dem mindestens eine Art von *Antiresonanzelement-Vorformlingen* in mindestens einem *Hüllrohr* platziert worden ist. Der *Antiresonanzelement-Vorformling* oder die *Antiresonanzelement-Vorformlinge* sind dabei noch nicht vollständig in dem *Hüllrohr* fixiert, sondern sie sind lediglich an den beiden Enden des *Hüllrohrs* befestigt, beispielsweise mittels einer geeigneten Klebemasse oder durch Verschmelzungen. Im Sinne der Erfindung werden auch solche *Halbzeuge* noch als *primäre Vorformlinge* bezeichnet, bei denen eine lokale Fixierung der *Antiresonanzelement-Vorformlinge* im *Hüllrohr* stattgefunden hat, um ein umfänglich umlaufendes Einschneiden ohne Beschädigung der *Antiresonanzelement-Vorformlinge* zu ermöglichen. Es ist ebenfalls möglich, eine geeignete Vorrichtung oder Schablone, an welche die *Antiresonanzelement-Vorformlinge* angeschraubt werden, zu benutzen, um die *Antiresonanzelement-Vorformlinge* kraftschlüssig im Hüllrohr-Innenraum zu befestigen. Es ist prinzipiell möglich, den fertigen *primären Vorformling* oder den "*Stack*" mittels *Faserzug* bis zur antiresonanten Hohlkernfaser zu verarbeiten.

Im Sinne der vorliegenden Erfindung bezeichnet der Begriff *Vorform* ein solches *Halbzeug,* bei dem *Antiresonanzelement-Vorformlinge* fixiert in einem *Hüllrohr* vorliegen. Solange nur ein Hüllrohr verwendet wird, ist von einer *primären Vorform* die Rede. Wird mindestens ein Mantelrohr auf die primäre Vorform aufkollabiert, so ist von einer *finalen Vorform* die Rede.

Im Sinne der vorliegenden Erfindung bezeichnet der Begriff *primäre Vorform* oder "*Cane*" ein solches *Halbzeug* des erfindungsgemäßen Verfahrens, bei welchem ein *primärer Vorformling* mindestens einem *Kollabierungs-* oder *Kollabierungs- und Elongierungsschritt,* gegebenenfalls gleichzeitig oder sukzessive ausgeführt, unterzogen worden ist. Im Sinne des erfindungsgemäßen Verfahrens erfolgt ein *Kollabierungs-* oder *Kollabierungs- und Elongierungsschritt* insbesondere unter thermischer Einwirkung in einem Zugverfahren als Heißformprozessschritt. Es ist prinzipiell möglich, die fertige *primäre Vorform* oder den *Cane* mittels eines *Faserzugs* bis zur antiresonanten Hohlkernfaser zu verarbeiten.

Im Sinne der vorliegenden Erfindung bezeichnet der Begriff *Mantelrohr* ein Objekt, welches auch als "Zylinder" oder "Jacket" aufgefasst werden kann. Es weist eine Mantelrohr-Innenbohrung und eine Mantelrohr-Längsachse auf, entlang der sich eine von einer Innenmantelfläche und einer Außenmantelfäche begrenzte Mantelrohr-Wandung erstreckt. Im Gegensatz zum *Hüllrohr* als Bestandteil des *primären Vorformlings* oder der *primären Vorform* wird das *Mantelrohr* beispielsweise auf den bestehenden *primären Vorformling* oder die bestehende *primäre Vorform aufkollabiert,* um dann eine *finale Vorform* oder eine *sekundäre Vorform* zu bilden. Es ist ebenfalls möglich neben dem *Aufkollabieren* des *Mantelrohrs* auf die *primäre Vorform* oder den *primären Vorformling* im selben Schritt den *Faserzug* durchzuführen, indem während des *Aufkollabierens* immer weiter *kollabiert* und *elongiert* wird.

Im Sinne der Erfindung bezeichnet der Begriff *Baueinheit* ein System, bei welchem eine Vorform gasdicht an einer ersten Endfläche mit einem Druckanschluss verbunden worden ist, sodass ein Druck in den hohlen Innenräumen der Vorform aufgebaut werden kann, wenn die zweite Endfläche der Vorform verschlossen wird oder wenn während des *Faserzugs* die hohlen Innenräume in den *Kapillaren* einen so geringen Querschnitt erhalten, dass ein Druckausgleich durch die *Kapillaren* nur noch sehr langsam erfolgen kann.

Im Sinne der vorliegenden Erfindung bezeichnet der Begriff *finale Vorform* das Ergebnis mindestens eines Heißformprozessschrittes, der an einem *primären Vorformling* (Stack), auf welchen ein *Mantelrohr aufkollabiert* worden ist, einer *primären Vorform* (Cane), auf welche ein *Mantelrohr aufkollabiert* worden ist, oder einer *sekundären Vorform* ausgeführt wird, wobei das jeweilige *Halbzeug kollabiert, kollabiert und gleichzeitig elongiert* oder *kollabiert* und im Anschluss *elongiert* wird.

Wenn im Sinne der vorliegenden Erfindung von explizit bezeichneten Zahlenwerten in einem Bereich von X bis Y oder von mindestens X bis mindestens Y oder von größer als X bis größer als Y etc. die Rede ist, sind damit insbesondere auch alle implizit dazwischen liegenden Werte erfasst, die durch die Angabe der Nullstellen suggeriert werden. Liegt ein Wert also zwischen 1 und 10 sind damit insbesondere auch 2, 3, 4, 5, 6, 7, 8, und 9 mit umfasst. Liegt ein Wert zwischen 1,0 und 2,0 sind damit insbesondere auch 1,1, 1,2, 1,3, 1,4, 1,5, 1,6, 1,7, 1,8 und 1,9 mit umfasst. Liegt ein Wert zwischen 1,00 und 1,10 sind damit insbesondere auch 1,01, 1,02, 1,03, 1,04, 1,05, 1,06, 1,07, 1,08 und 1,09 mit umfasst.

### II. Verfahren

Das erfindungsgemäße Verfahren dient zur in industriellem Maßstab anwendbaren Herstellung von Vorformen, wie sie üblicherweise in der Produktion von antiresonanten Hohlkernfasern Anwendung finden. Es ermöglicht die Vorformen entsprechend einer Solllänge herzustellen, ohne, dass das Risiko besteht, dass die hohlen Innenräume der Vorformen verunreinigt werden. Es ermöglicht weiterhin, dass die Endfläche der Vorformen für einen Druckanschluss zugänglich wird. Vorformen, die mittels des erfindungsgemäßen Verfahrens in einer Solllänge hergestellt werden, umfassen:

a) einen Glaskörper mit Hohlstrukturen, mit einer Glaskörper-Innenbohrung und einer Glaskörper-Längsachse, entlang der sich eine von einer Innenglaskörperfläche und einer Außenglaskörperfläche begrenzte Glaskörper-Wandung erstreckt, und
b) Antiresonanzelement-Vorformlinge.

Es ist im Sinne des erfindungsgemäßen Verfahrens bevorzugt, dass die Antiresonanzelement-Vorformlinge zumindest bereits teilweise an den Glaskörper fixiert worden sind, insbesondere dann, wenn es sich bei dem Glaskörper einen primären Vorformling handelt. Die lokale Fixierung erfolgt dann bevorzugt dort, wo mittels eines umfänglich umlaufenden Einschnitts die erfindungsgemäße Solltrennstelle induziert werden soll. Besonders bevorzugt ist es, wenn die Antiresonanzelement-Vorformlinge bereits vollständig an den Glaskörper fixiert worden sind und der Glaskörper eine primäre oder finale Vorform im Sinne der Erfindung darstellt. Erfindungsgemäß werden zur Abtrennung in Solllänge die folgenden Verfahrensschritte ausgeführt:

i) umfänglich umlaufendes Einschneiden einer Solltrennstelle auf der Außenglaskörperfläche ohne, dass die Glaskörper-Wandung vollständig durchdrungen wird und ohne, dass die Vorform vollständig abgetrennt wird, mittels einer geeigneten Schneidevorrichtung, und
ii) Ausüben einer Krafteinwirkung entlang der Solltrennstelle auf den Glaskörper mittels einer geeigneten Vorrichtung bis zum Abbruch einer Vorform mit Solllänge.

Im Sinne des vorliegenden erfindungsgemäßen Verfahrens wird im Gegensatz zum üblicherweise im Stand der Technik bekannten Einschneiden einer Außenglaskörperfläche ein umfänglich umlaufender Einschnitt vorgenommen. Ein solcher Einschnitt birgt den generellen Vorteil, dass die Solltrennstelle gleichmäßig um den Außenglaskörper verteilt ist und nur noch ein geringer Kraftaufwand erforderlich ist, um die Vorform in Solllänge abzutrennen.

Es ist dabei im Sinne der Erfindung sowohl denkbar den Glaskörper während des Einschnitts zu rotieren als auch verschiedene Einschnitte und Rotationen in sequenzieller Weise vorzunehmen. Das Resultat ist dann entweder ein absolut kreisrunder umfänglich umlaufender Einschnitt, wenn der Glaskörper während des Einschneidens rotiert wird, oder ein polygonaler umfänglich umlaufender Einschnitt, wenn mehrere Einschnitte an unterschiedlichen Positionen vorgenommen werden.

Der umfänglich umlaufende Einschnitt wird erfindungsgemäß vorgenommen, indem die Vorform horizontal auf Rollen gelagert, rotiert und entweder während der Rotation oder jeweils im Wechsel zwischen Rotation und Einschneiden, mit einer geeigneten Schneidevorrichtung eingeschnitten wird. Dabei wird die Vorform jedoch nicht vollständig durchtrennt und sie wird auch nicht so weit eingeschnitten, dass die Innenglaskörperfläche freigelegt wird. Es ist dabei erfindungsgemäß bevorzugt Maßnahmen zu ergreifen, die das Risiko einer Kontamination der Hohlräume der Vorform durch feste oder flüssige Verunreinigungen zu vermeiden.

Im Sinne des erfindungsgemäßen Verfahrens ist der umfänglich umlaufende Einschnitt der Außenglaskörperfläche mit allen denkbaren Schneidevorrichtungen ausführbar. Generell kann der umfänglich umlaufende Einschnitt also sowohl mit mechanischen als auch mit hochenergetischen Schneidevorrichtungen vorgenommen werden. Die einzige Voraussetzung für die Anwendbarkeit ist, dass der Einschnitt insofern kontrollierbar ist, dass der Glaskörper nicht zu weit eingeschnitten wird, der Einschnitt also nicht ungewollt bis in die hohlen Innenräume eindringt.

Denkbar sind also mechanische Schneidevorrichtungen wie Sägen, Trennschleifer oder Wasserstrahlschneider. Ebenfalls möglich sind hochenergetische Schneidevorrichtungen Laserschneider, Plasmaschneider oder Brennschneider. Im Sinne der Erfindung ist es insbesondere bevorzugt mechanische Schneidevorrichtungen zu verwenden. Diese weisen den Vorteil auf, dass sie im industriellen Maßstab einfach skalierbar einzusetzen sind. Ganz besonders bevorzugt sind Kreissägen und Bandsägen, insbesondere Kippsägen mit rotierendem Sägeblatt. Dadurch wird es ermöglicht, die Einschnitttiefe genau zu regulieren.

Daneben ist es im Sinne des erfindungsgemäßen Verfahrens ebenfalls bevorzugt, wenn der mit einer geeigneten Schneidevorrichtung vorgenommene Einschnitt in die Außenglaskörperfläche in einem Winkel von 85° bis 95° zum horizontal platzierten Glaskörper vorgenommen wird. Das bedeutet, der umfänglich umlaufende Einschnitt wird bei einem Winkel von 85°, 86°, 87°, 88°, 89°, oder von 90°, 91°, 92°, 93°, 94° oder von 95,0°. Bevorzugt wird der umfänglich umlaufende Einschnitt in einem Winkel von 89° bis 91° vorgenommen, am bevorzugtesten bei 90° vorgenommen.

Der Einschnitt ist bevorzugterweise rechtwinklig, um eine möglichst gerade und möglichst ebene Endfläche auf der Vorform mit Solllänge zu erzeugen. Eine Endfläche mit solchen Oberflächeneigenschaften ist bevorzugt, da sie bei gleichbleibender Qualität der Beschaffenheit regelmäßig mit einem Druckanschluss verbunden werden kann, wodurch während der Verarbeitung der Vorform zu einer antiresonanten Hohlkernfaser ein innseitiger Druck anlegbar wird.

Der angelegte Druck stabilisiert eine runde, Geometrie der Antiresonanzelement-Vorformlinge während durchgeführter Heißformprozessschritte bei der Verarbeitung zur antiresonanten Hohlkernfaser und wird bevorzugt mittels eines Gasstroms erzeugt. Ein weiterer bevorzugter Effekt des Gasstroms ist, dass auch die Größe der Kapillaren mittels des angelegten Drucks beeinflussbar ist. Beispielsweise kann durch einen höheren Druck ein größerer Durchmesser der Kapillaren in der antiresonanten Hohlkernfaser erhalten werden. Dabei wird ein Inertgasstrom eingeleitet, beispielsweise ein Strom aus Argon, Stickstoff oder synthetischer Luft ohne Wasseranteil.

Der umfänglich umlaufende Einschnitt zeichnet sich durch eine Einschnittbreite aus, die bevorzugt einzig von der Breite des Schneideelements in der Schneidevorrichtung abhängt. Demnach ist es erfindungsgemäß, wenn die Einschnittbreite eines umfänglich umlaufenden Einschnitts, welcher mit einer Sägevorrichtung auf einem Glaskörper aufgebracht wurde, der Breite des Sägeblatts entspricht.

Wie zuvor bereits erwähnt, wird der umfänglich umlaufende Einschnitt erfindungsgemäß bevorzugt derart ausgeführt, dass der Glaskörper nicht so weit eingeschnitten wird, dass die Glaskörper-Wandung vollständig durchdrungen wird. Die innseitigen hohlen Strukturen der Glaskörper werden also bevorzugt nicht offengelegt. Dementsprechend bleibt vor dem Abtrennen der Vorform in Solllänge also ein Restglaskörper mit einer Restglaskörper-Wandungsstärke (($d_{ASC}$ *distance annular-saw-cut* [mm]) übrig.

Der Begriff Restglaskörper bezeichnet im Sinne der vorliegenden Erfindung insbesondere einen Glaskörper, der an der Solltrennstelle umfänglich umlaufend eingeschnitten worden ist, ohne, dass die hohlen Innenstrukturen offengelegt worden sind. Prinzipiell ist der Restglaskörper also genauso beschaffen wie der Glaskörper, jedoch ist seine Wandstärke lokal geringer als global, und zwar entsprechend der Breite und der Tiefe des vorgenommenen Einschnitts. Die Breite des vorgenommenen Einschnitts ist dabei im Sinne der Erfindung von der Breite des schneidenden Elements der Schneidevorrichtung abhängig, also etwa der Breite des Sägeblatts, des Laser- oder Wasserstrahls etc.. Die lokal verminderte Wandstärke des Restglaskörpers wird im Sinne der Erfindung als Restglaskörperwandungsstärke ($d_{ASC}$) bezeichnet.

Im Sinne des erfindungsgemäßen Verfahrens ergibt sich die Restglaskörper-Wandungsstärke ($d_{ASC}$) aus dem Halben der Differenz zwischen dem Außendurchmesser des Restglaskörpers (($OD_{res}$ *outer diameter residue glass* [mm]) und dem Durchmesser der Hohlstruktur des Glaskörpers ($ID_{pre}$ *inner diameter preform* [mm]). Dabei ist mit dem Außendurchmesser des Restglaskörpers ($OD_{res}$) der über die Breite des vorgenommenen Einschnitts lokal geringere Außendurchmesser gemeint, der dem Außendurchmesser des Glaskörpers ($OD_{pre}$ *outer diameter preform* [mm]) gegenübersteht. Die folgende Formel gibt den Sachverhalt wieder:

$$d_{ASC} = \frac{OD_{res} - ID_{pre}}{2}$$

Neben der Restglaskörper-Wandungsstärke ist der Restglaskörper lokal begrenzt über die Breite des vorgenommenen Einschnitts auch durch die Einschnitttiefe des umfänglich umlaufenden Einschnitts ($d_{cut}$ *distance cut* [mm]) gekennzeichnet. Im Sinne des erfindungsgemäßen Verfahrens ergibt sich die Einschnitttiefe aus dem Halben der Differenz zwischen dem Außendurchmesser des Glaskörpers ($OD_{pre}$) und dem Außendurchmesser des Restglaskörpers ($OD_{res}$) nach der folgenden Formel:

$$d_{cut} = \frac{OD_{pre} - OD_{res}}{2}$$

Um die erfindungsgemäß bevorzugte Anforderung zu erfüllen, dass die innseitigen Hohlstrukturen des Glaskörpers nicht durch den Einschnitt offengelegt werden, muss die Einschnitttiefe des umfänglich umlaufenden Einschnitts ($d_{cut}$) eine geringere Größe aufweisen als die Glaskörper-Wandungsstärke ($d_{pre}$ *distance preform wall* [mm]).

Im Sinne der vorliegenden Erfindung unterscheidet sich die Einschnitttiefe des umfänglich umlaufenden Einschnitts ($d_{cut}$) von der Größe der Restglaskörper-Wandungsstärke ($d_{ASC}$) um einen Faktor von 15,0 bis 0,1. Das bedeutet, die Einschnitttiefe ist beispielsweise 15,0 mal größer als die Restglaskörper-Wandungsstärke oder beispielsweise nur 0,1 mal so groß wie die Restglaskörper-Wandungsstärke. Der Faktor zwischen der Einschnitttiefe des umfänglich umlaufenden Einschnitts ($d_{cut}$) und der Restglaskörper-Wandungsstärke ($d_{ASC}$) ist also 15,0, 14,5, 14,0, 13,5, 13,0, 12,5, 12,0, 11,5, 11,0, 10,5 oder 10,0, 9,5, 9,0, 8,5, 8,0, 7,5, 7,0, 6,5, 6,0, 5,5 oder 5,0, 4,5, 4,0, 3,5, 3,0, 2,5, 2,0, 1,5, oder 1,0, 0,9, 0,8, 0,7, 0,6, 0,5, 0,4, 0,3, 0,2 oder 0,1. Bevorzugt liegt das Verhältnis zwischen der Einschnitttiefe des umfänglich umlaufenden Einschnitts ($d_{cut}$) und der Größe der Restglaskörper-Wandungsstärke ($d_{ASC}$) zwischen 10,0 und 0,5.

Der Außendurchmesser der Vorform $OD_{pre}$ liegt im Sinne der Erfindung bevorzugt zwischen 240 mm und 2 mm. Beispielsweise beträgt der Außendurchmesser also 240 mm, 230 mm, 220 mm, 210 mm, oder 200 mm, 190 mm, 180 mm, 170 mm, 160 mm oder 150 mm, 140 mm, 130 mm, 120 mm, 110 mm oder 100 mm, 90 mm, 80 mm, 70 mm, 60 mm, 50 mm, 40 mm, 30 mm, 20 mm oder 10 mm, 9 mm, 8 mm, 7 mm, 6 mm, 5 mm, 4 mm, 3 mm oder 2 mm. Er ergibt sich aus den summierten Außendurchmessern des mindestens einen Hüllrohr und des gegebenenfalls vorhandenen Mantelrohrs oder der gegebenenfalls vorhandenen Mantelrohre, welche den Glaskörper der Vorform bilden.

Erfindungsgemäß sind große Einschnitttiefen und kleine Restglaskörper-Wandungsstärken bevorzugt, um ein Abtrennen der Vorform in Solllänge zu gewährleisten, dass nur einen geringen Kraftaufwand erfordert. Außerdem kann über den eingeschnittenen Anteil der Solltrennstelle, bzw. der Endfläche der Vorform in Solllänge, eine bessere Kontrolle über die Beschaffenheit der Oberfläche ausgeübt werden als über den gebrochenen Anteil. Die Wahl der Schneidevorrichtung, die Bedingungen während des Schneidevorgangs, wie ob trocken oder nass geschnitten wird oder wie schnell der Glaskörper rotiert wird kann beeinflusst werden. Da eine möglichst ebene Fläche erfindungsgemäß bevorzugt wird, ist es also bevorzugt, einen möglichst großen Anteil der Fläche einzuschneiden.

Entlang der Schnittbreite entsteht durch den umfänglich umlaufenden Einschnitt eine Querschnittsfläche $CSA_{cut}$ *(Cross-Section-Area cut* [mm$^2$]*)*, an welcher der Restglaskörper bereits getrennt vorliegt. Da der umfänglich umlaufende Einschnitt nicht vollständig durch die gesamte Breite des Glaskörpers erfolgt, bleibt am Restglaskörper auch eine Querschnittsfläche $CSA_{ASC}$ *(Cross-Section-Area Annular-Saw-Cut* [mm$^2$]*)* vorhanden, welche den Teil des Querschnitts des umfänglich umlaufenden Einschnitts des Restglaskörpers bezeichnet, der noch nicht durch den umfänglich umlaufenden Einschnitt getrennt worden ist und erst im späteren Verfahrensverlauf durch das Ausüben einer Krafteinwirkung getrennt wird. Innerhalb der Hohlräume des Glaskörpers bleibt ebenfalls die Endfläche der in diesen Hohlräumen fixierten Antiresonanzelement-Vorformlingen übrig, welche auch erst im späteren Verfahrensverlauf durch das Ausüben einer Krafteinwirkung getrennt werden.

Erfindungsgemäß bevorzugt unterscheiden sich die Flächengrößen der Querschnittsfläche des umfänglich umlaufenden Einschnitts ($CSA_{cut}$) und der Querschnittsfläche des Restglaskörpers ($CSA_{ASC}$) um einen Faktor von 35,0 bis 0,5. Das bedeutet, die Querschnittsfläche des umfänglich umlaufenden Einschnitts ist beispielsweise 35,0 mal größer als die Querschnittsfläche der Restglaskörpers oder beispielsweise nur 0,5 mal so groß wie die Querschnittsfläche des Restglaskörpers. Der Faktor zwischen der Querschnittsfläche des umfänglich umlaufenden Einschnitts ($CSA_{cut}$) und der Querschnittsfläche des Restglaskörpers ($CSA_{ASC}$) ist also 35,0, 34,5, 34,0, 33,5, 33,0, 32,5, 32,0, 31,5, 31,0, 30,5 oder 30,0, 29,5, 29,0, 28,5, 28,0, 27,5, 27,0, 26,5, 26,0, 25,5 oder 25,0, 24,5, 24,0, 23,5, 23,0, 22,5, 22,0, 21,5, 21,0, 20,5 oder 20,0, 19,5, 19,0, 18,5, 18,0, 17,5, 17,0, 16,5, 16,0, 15,5 oder 15,0, 14,5, 14,0, 13,5, 13,0, 12,5, 12,0, 11,5, 11,0, 10,5 oder 10,0, 9,5, 9,0, 8,5, 8,0, 7,5, 7,0, 6,5, 6,0, 5,5 oder 5,0, 4,5, 4,0, 3,5, 3,0, 2,5, 2,0, 1,5, oder 1,0, 0,9, 0,8, 0,7, 0,6 oder 0,5. Bevorzugt liegt das Verhältnis zwischen der Flächengröße der Querschnittsfläche des umfänglich umlaufenden Einschnitts ($CSA_{cut}$) und der Querschnittsfläche des Restglaskörpers ($CSA_{ASC}$) zwischen 20,0 und 0,5.

Erfindungsgemäß sind große Querschnittsflächen des umfänglich umlaufenden Einschnitts bevorzugt, um ein Abtrennen der Vorform in Solllänge zu gewährleisten, dass nur einen geringen Kraftaufwand erfordert. Wie bereits beschrieben ermöglicht eine große geschnittene Fläche ebenfalls eine bessere Kontrolle über die Oberflächenbeschaffenheit der Endfläche in der Vorform in Solllänge. Durch eine möglichst ebene Endfläche wird ein Druckanschluss ermöglicht, welcher im Rahmen der weiteren Verarbeitung der Vorform zu einer antiresonanten Hohlkernfaser das Anlegen eines Druckes ermöglicht, welcher die Antiresonanzelement-Vorformlinge im Inneren der Vorformen stabilisiert.

Im Sinne der vorliegenden Erfindung ist es optional ebenfalls möglich, neben dem umfänglich umlaufenden Einschnitt, der die Solltrennstelle darstellt, eine zusätzliche Kerbe über einen begrenzten Teil der Schnittbreite zu induzieren. Beispielsweise kann mittels derselben oder einer anderen Schneidevorrichtung, mit welcher der umfänglich umlaufende Einschnitt der Solltrennstelle erfolgt ist, noch ein zusätzlicher Einschnitt entlang eines Anteils der Strecke des umfänglich umlaufenden Einschnitts vorgenommen werden, der sich durch eine größere Einschnitttiefe im Vergleich zum umfänglich umlaufenden Einschnitt auszeichnet.

Das Induzieren einer Kerbe kann vorteilhaft sein, wenn die Krafteinwirkung zur vollständigen Abtrennung der Vorform in einer Solllänge über eine Biegung der Vorform ausgeübt werden soll. Erfindungsgemäß bevorzugt ist es jedoch, wenn der umfänglich umlaufende Zuschnitt ohne die Induktion einer zusätzlichen Kerbe vorgenommen wird, jedoch ist die Kerbe auch vom Umfang der Erfindung mit umfasst.

Wenn eine Kerbe induziert wird, so ist diese bevorzugt 0, 010 bis 1,50 mal so tief wie die Einschnitttiefe des umfänglich umlaufenden Einschnitts, sie ist also 0,01, 0,02, 0,03, 0,04, 0,05, 0,06, 0,07, 0,08, 0,09, oder 0,10, 0,20, 0,30, 0,40, 0,50, 0,60, 0,70, 0,80, 0,90, 1,00 oder 1,01, 1,02, 1,03, 1,04, 1,05, 1,06, 1,07, 1,08, 1,09, oder 1,10, 1,11, 1,12, 1,13, 1,14, 1,15, 1,16, 1,17, 1,18, 1,19, oder 1,20 1,21, 1,22, 1,23, 1,24, 1,25, 1,26, 1,27, 1,28, 1,29, oder 1,30, 1,31, 1,32, 1,33, 1,34, 1,35, 1,36, 1,37, 1,38, 1,39, oder 1,40, 1,41, 1,42, 1,43, 1,44, 1,45, 1,46, 1,47, 1,48, 1,49, oder 1,50 mal so tief wie die Einschnitttiefe des umfänglich umlaufenden Zuschnitts.

Die induzierte Kerbe erstreckt sich erfindungsgemäß bevorzugt über einen Längenanteil des Glaskörperumfangs der 0,2 bis 1,7 des Gesamtradius des Glaskörpers (inklusive dessen Hohlstrukturen) entspricht. Das bedeutet, die Kerbe weist eine Länge auf, die 0,2, 0,3, 0,4, 0,5, 0,6, 0,7, 0,8, 0,9, oder 1,0, 1,1, 1,2, 1,3, 1,4, 1,5, 1,6, oder 1,7 mal dem Gesamtradius des Glaskörpers entspricht.

Es ist erfindungsgemäß bevorzugt den umfänglich umlaufenden Zuschnitt und die optionale Induzierung der Kerbe an Vorformen erfolgen zu lassen, bei denen die Antiresonanzelement-Vorformlinge bereits über die gesamte Länge der Vorform an den Glaskörper fixiert worden sind. Im Sinne der Erfindung werden Vorformen aus primären Vorformlingen bzw. "Stacks" hergestellt. Stacks zeichnen sich dadurch aus, dass Antiresonanzelement-Vorformlinge wie oben beschrieben nur endseitig an einem Glaskörper fixiert worden sind. Wird ein umfänglich umlaufender Einschnitt auf einen Glaskörper angewendet, in welchem die Antiresonanzelement-Vorformlinge noch nicht fixiert vorliegen, kann die durch den Einschnitt auftretende mechanische Vibration des Stacks die Antiresonanzelement-Vorformlinge beschädigen oder Ihre Position innerhalb der Hohlstrukturen beeinflussen, sodass die Geometriegenauigkeit verringert wird. Es ist aber im Sinne der Erfindung denkbar, dass die Antiresonanzelement-Vorformlinge teilweise abseits der endständigen Fixierung im Glaskörper fixiert vorliegen und ein umfänglich umlaufender Einschnitt an der Stelle erfolgt, an welcher die Antiresonanzelement-Vorformlinge bereits am Glaskörper fixiert sind. So können gegebenenfalls auch Vorformen in Solllänge hergestellt werden, bei denen die Antiresonanzelement-Vorformlinge noch nicht über die ganze Länge fixiert sind und die Antiresonanzelement-Vorformlinge während des umfänglich umlaufenden Einschnitts trotzdem vor einer Beschädigung oder Positionsverschiebung geschützt sind.

Das erfindungsgemäße Verfahren umfassend des umfänglich umlaufenden Einschnitts, bei dem nicht in die Hohlräume des Glaskörpers eingeschnitten wird, hat unter anderem den bedeutenden Vorteil, dass Verunreinigungen, die während eines Schneidevorgangs entstehen, nicht in die Hohlräume eindringen können. Das umfasst beispielsweise Glasstäube oder Flüssigkeiten wie Wasser, die während des Schneidevorgangs aufgetragen werden, um den Glaskörper während des Einschneidens zu Kühlen und die Bildung von Glasstaubwolken zu verhindern. Es kann gegebenenfalls erfindungsgemäß von Vorteil sein, die Endseite der Vorform, die entsprechend der Solllänge von der mittels umfänglich umlaufendem Einschnitt und optional einer Kerbe induzierten Solltrennstelle entfernt liegt, mit einem geeigneten Isolator zu verschließen, um das Eindringen von Verunreinigungen auch an dieser Stelle zu verhindern.

Im Sinne der Erfindung erfolgt in Verfahrensschritt ii) der Abbruch der Vorform in Solllänge entlang der mittels des umfänglich umlaufenden Einschnitts aufgebrachten und optional mit einer zusätzlichen Kerbe ausgestatteten Solltrennstelle. Erfindungsgemäß wird der Abbruch mittels einer Krafteinwirkung induziert. Prinzipiell sind dabei verschiedene Arten der Krafteinwirkung denkbar, wie das Ausüben einer Zugspannung, einer Torsionskraft oder das Ausüben einer Biegung. Es ist erfindungsgemäß bevorzugt, wenn eine Zugspannung oder eine Torsionskraft ausgeübt wird. Mit Torsionskraft ist im Sinne der Erfindung gemeint, dass der eingeschnittene Glaskörper an einer Stelle fixiert wird, während der Teil, der zu einer Vorform in Solllänge verarbeitet werden soll, rotiert wird. Dabei wird der nicht eingeschnittene Anteil der Solltrennstelle abgebrochen. Die Ausübung der Krafteinwirkung kann sowohl manuell als auch mittels einer dafür konzipierten Vorrichtung erfolgen.

Durch den bevorzugterweise großen Querschnitt $CSA_{cut}$ ist bevorzugt nur noch ein kleiner Teil des Restglaskörpers im Querschnitt $CSA_{ASC}$ verbunden und kann mittels einer relativ geringen Krafteinwirkung eben abgetrennt werden. Es ist daher vorteilhaft, beispielsweise aus einer horizontalen Lage der Vorform heraus, eine ebenfalls horizontale Zugspannung auszuüben. Somit ist die Krafteinwirkung auf den Querschnitt $CSA_{ASC}$ gleichmäßig und die Trennung erfolgt durch Bildung einer ebenen Endfläche für die Vorform in Solllänge.

Endflächen, die mittels des erfindungsgemäßen Verfahrens für Vorformen in Solllänge erhalten werden, zeichnen sich durch ausgezeichnet ebene Flächen aus, trotz dessen, dass sie zumindest Teils durch einen Bruch erzeugt worden sind. Wenn die Endflächen mit der 3D Laserscanning Mikroskopie untersucht werden, können bevorzugt verschiedene Parameter erfasst werden, welche die Ebenheit der Endfläche quantifizieren.

Im Sinne der Erfindung weist der geschnittene Anteil der Solltrennstelle, also der Querschnitt $CSA_{cut}$, eine mittlere arithmetische Höhe (Sa), von nicht mehr als 2,000 µm auf. Die mittlere arithmetische Höhe (Sa) wird mittels der 3D Laserscanning Mikroskopie bestimmt. Das bedeutet, Sa beträgt 2,000 µm, 1,990 µm, 1,980 µm, 1,970 µm, 1,960 µm 1,950 µm, 1,940 µm 1,930 µm, 1,920 µm, 1,910 µm, oder 1,900 µm, 1,890 µm, 1,880 µm, 1,870 µm, 1,860 µm 1,850 µm, 1,840 µm 1,830 µm, 1,820 µm, 1,810 µm, oder 1,800 µm, 1,790 µm, 1,780 µm, 1,770 µm, 1,760 µm 1,750 µm, 1,740 µm 1,730 µm, 1,720 µm, 1,710 µm, oder 1,700 µm, 1,690 µm, 1,680 µm, 1,670 µm, 1,660 µm 1,650 µm, 1,640 µm 1,630 µm, 1,620 µm, 1,610 µm, oder 1,500 µm, 1,490 µm, 1,480 µm, 1,470 µm, 1,460 µm 1,450 µm, 1,440 µm 1,430 µm, 1,420 µm, 1,410 µm, oder 1,400 µm, 1,390 µm, 1,380 µm, 1,370 µm, 1,360 µm 1,350 µm, 1,340 µm 1,330 µm, 1,320 µm, 1,310 µm, oder 1,300 µm, 1,290 µm, 1,280 µm, 1,270 µm, 1,260 µm 1,250 µm, 1,240 µm 1,230 µm, 1,220 µm, 1,210 µm, oder 1,200 µm, 1,190 µm, 1,180 µm, 1,170 µm, 1,160 µm 1,150 µm, 1,140 µm 1,130 µm, 1,120 µm, 1,110 µm, oder 1,100 µm, 1,090 µm, 1,080 µm, 1,070 µm, 1,060 µm 1,050 µm, 1,040 µm 1,030 µm, 1,020 µm, 1,010 µm, oder 1,000 µm, 0,990 µm, 0,980 µm, 0,970 µm, 0,960 µm 0,950 µm, 0,940 µm 0,930 µm, 0,920 µm, 0,910 µm, oder 0,900 µm, 0,890 µm, 0,880 µm, 0,870 µm, 0,860 µm 0,850 µm, 0,840 µm 0,830 µm, 0,820 µm, 0,810 µm, oder 0,800 µm, 0,790 µm, 0,780 µm, 0,770 µm, 0,760

μm 0,750 μm, 0,740 μm 0,730 μm, 0,720 μm, 0,710 μm, oder 0,700 μm, 0,690 μm, 0,680 μm, 0,670 μm, 0,660 μm 0,650 μm, 0,640 μm 0,630 μm, 0,620 μm, 0,610 μm, oder 0,500 μm oder auch kleiner als 0,500 μm. Die mittlere arithmetische Höhe drückt den Betrag des Höhenunterschieds eines jeden Punkts im Vergleich zum arithmetischen Mittel der Oberfläche aus.

Im Sinne der Erfindung weist der geschnittene Anteil der Solltrennstelle, also der Querschnitt $CSA_{cut}$, eine maximale Höhe (Sz) von 25,000 μm auf. Das bedeutet, die maximale Höhe Sz ist nicht größer als 25,000 μm, 24,500 μm, 24,000 μm, 23,500 μm, 23,000 μm, 22,500 μm, 22,000 μm, 21,500 μm, 21,000 μm, 20,500 μm oder 20,000 μm, 19,500 μm, 19,000 μm, 18,500 μm, 18,000 μm, 17,500 μm, 17,000 μm, 16,500 μm, 16,000 μm, 15,500 μm oder 15,000 μm, 14,500 μm, 14,000 μm, 13,500 μm, 13,000 μm, 12,500 μm, 12,000 μm, 11,500 μm, 11,000 μm, 10,500 μm oder 10,000 μm, 9,500 μm, 9,000 μm, 8,500 μm, 8,000 μm, 7,500 μm, 7,000 μm, 6,500 μm, 6,000 μm, 5,500 μm oder nicht größer als 5,000 μm oder auch kleiner als 5,000 μm. Die maximale Höhe (Sz) drückt die Summe aus dem Höhenwert der höchsten Spitze und dem Höhenwert der stärksten Vertiefung innerhalb des Definitionsbereichs auf der Oberfläche der Endfläche aus.

Im Sinne der Erfindung weist der eingeschnittene Anteil der Solltrennstelle, also der Querschnitt $CSA_{cut}$, ein Seitenverhältnis der Oberflächentextur (Str) welches 0,400 nicht übersteigt. Das bedeutet, der Wert übersteigt 0,400, 0,390, 0,380, 0,370, 0,360, 0,350, 0,340, 0,330, 0,320, 0,310, 0,300, 0,290, 0,280, 0,270, 0,260, 0,250, 0,240, 0,230, 0,220, 0,210, 0,200, 0,190, 0,180, 0,170, 0,160, 0,150, 0,140, 0,130, 0,120, 0,110 0,100, 0,090, 0,080, 0,070, 0,060, 0,050, 0,040, 0,030, 0,020 oder 0,010 nicht oder ist geringer als 0,010. Beim Seitenverhältnis der Oberflächenstruktur (Str) handelt es sich um ein Maß für die Gleichförmigkeit der Oberflächentextur. Der Wert liegt zwischen 0 und 1, wobei 0 eine absolut gleichförmige Oberfläche beschreibt und 1 eine absolut ungleichförmige.

Im Sinne der Erfindung weist der eingeschnittene Anteil der Solltrennstelle, also der Querschnitt $CSA_{cut}$ einen arithmetischen Mittelwert der Spitzenkrümmung (Spc) von nicht weniger als 1000,000 $mm^{-1}$ auf. Das bedeutet, der arithmetische Mittelwert der Spitzenkrümmung Spc beträgt 1000,000 $mm^{-1}$, 1010,000 $mm^{-1}$, 1020,000 $mm^{-1}$, 1030,000 $mm^{-1}$, 1040,000 $mm^{-1}$, 1050,000 $mm^{-1}$, 1060,000 $mm^{-1}$, 1070,000 $mm^{-1}$, 1080,000 $mm^{-1}$, 1090,000 $mm^{-1}$ oder 1100,000 $mm^{-1}$, 1110,000 $mm^{-1}$, 1120,000 $mm^{-1}$, 1130,000 $mm^{-1}$, 1140,000 $mm^{-1}$, 1150,000 $mm^{-1}$, 1160,000 $mm^{-1}$, 1170,000 $mm^{-1}$, 1180,000 $mm^{-1}$, 1190,000 $mm^{-1}$ oder 1200,000 $mm^{-1}$, 1210,000 $mm^{-1}$, 1220,000 $mm^{-1}$, 1230,000 $mm^{-1}$, 1240,000 $mm^{-1}$, 1250,000 $mm^{-1}$, 1260,000 $mm^{-1}$, 1270,000 $mm^{-1}$, 1280,000 $mm^{-1}$, 1290,000 $mm^{-1}$ oder 1300,000 $mm^{-1}$, 1310,000 $mm^{-1}$, 1320,000 $mm^{-1}$, 1330,000 $mm^{-1}$, 1340,000 $mm^{-1}$, 1350,000 $mm^{-1}$, 1360,000 $mm^{-1}$, 1370,000 $mm^{-1}$, 1380,000 $mm^{-1}$, 1390,000 $mm^{-1}$ oder 1400,000 $mm^{-1}$, 1410,000 $mm^{-1}$, 1420,000 $mm^{-1}$, 1430,000 $mm^{-1}$, 1440,000 $mm^{-1}$, 1450,000 $mm^{-1}$, 1460,000 $mm^{-1}$, 1470,000 $mm^{-1}$, 1480,000 $mm^{-1}$, 1490,000 $mm^{-1}$ oder 1500,000 $mm^{-1}$, oder noch größer als 1500,000 $mm^{-1}$. Der arithmetische Mittelwert, der die Hauptkrümmung der Spitzen auf der Oberfläche beschreibt, ob die vorhandenen Spitzen spitz oder rundlich zulaufend sind.

Im Sinne der Erfindung weist der eingeschnittene Anteil der Solltrennstelle, also der Querschnitt $CSA_{cut}$ ein entwickeltes Grenzflächenverhältnis (Sdr) von nicht mehr als 0,3000 auf. Der Wert beträgt also beispielsweise 0,3000, 0,2990, 0,2980, 0,2970, 0,2960, 0,2950, 0,2940, 0,2940, 0,2930, 0,2920, 0,2910, 0,2900 oder 0,2890, 0,2880, 0,2870, 0,2860, 0,2850, 0,2840, 0,2840, 0,2830, 0,2820, 0,2810, 0,2800 oder 0,2790, 0,2780, 0,2770, 0,2760, 0,2750, 0,2740, 0,2740, 0,2730, 0,2720, 0,2710, 0,2700 oder 0,2690, 0,2680, 0,2670, 0,2660, 0,2650, 0,2640, 0,2640, 0,2630, 0,2620, 0,2610, 0,2600 oder 0,2590, 0,2580, 0,2570, 0,2560, 0,2550, 0,2540, 0,2540, 0,2530, 0,2520, 0,2510, 0,2500 oder 0,2490, 0,2480, 0,2470, 0,2460, 0,2450, 0,2440, 0,2440, 0,2430, 0,2420, 0,2410, 0,2400 oder 0,2390, 0,2380, 0,2370, 0,2360, 0,2350, 0,2340, 0,2340, 0,2330, 0,2320, 0,2310, 0,2300 oder 0,2290, 0,2280, 0,2270, 0,2260, 0,2250, 0,2240, 0,2240, 0,2230, 0,2220, 0,2210, 0,2200 oder 0,2190, 0,2180, 0,2170, 0,2160, 0,2150, 0,2140, 0,2140, 0,2130, 0,2120, 0,2110, 0,2100 oder 0,2090, 0,2080, 0,2070, 0,2060, 0,2050, 0,2040, 0,2040, 0,2030, 0,2020, 0,2010, 0,2000 oder 0,1900, 0,1800, 0,1700, 0,1600, 0,1500 oder er ist noch geringer als 1,500. Das entwickelte Grenzflächenverhältnis beschreibt den prozentualen Anteil der zusätzlichen Fläche des Definitionsbereichs, die auf die Textur zurückzuführen ist, im Vergleich zum absolut ebenen Definitionsbereich. Wenn die Oberfläche im Definitionsbereich eine Steigung aufweist, steigt Sdr an.

Im Sinne der Erfindung wird mittels des erfindungsgemäßen umfänglich umlaufenden Einschnitts also eine Querschnittsoberfläche $CSA_{cut}$ mit quantifizierbar ebener Oberfläche erhalten. Wird das erfindungsgemäße Verfahren umfassend des Schrittes ii) ausgeführt, werden auch die in den Hohlräumen des Glaskörpers befindlichen Antiresonanzelement-Vorformlinge und die Querschnittsfläche $CSA_{ASC}$ durch den krafteinwirkungsinduzierten Abbruch an der Stolltrennstelle getrennt.

Es entsteht also eine Vorform, deren Endfläche drei Bereiche auffasst, die mit den erfindungsgemäßen Trennverfahrensschritten korrespondieren. Die Endfläche weist eine Querschnittsfläche des umfänglich umlaufenden Einschnitts $CSA_{cut}$ des Glaskörpers auf, die vor der vollständigen Trennung der Vorform eingeschnitten worden ist. Desweiteren zeichnet sie sich durch eine Querschnittsfläche des Restglaskörpers $CSA_{ASC}$ aus, welche nicht eingeschnitten, sondern mittels eines Bruchs abgetrennt worden ist. Schließlich verfügt sie über die Endfläche der abgebrochenen Antiresonanzelement-Vorformlinge, welche zentral in den Hohlstrukturen des Glaskörpers fixiert vorliegen.

Erfindungsgemäß führt der Bruch der Antiresonanzelement-Vorformlinge weder zu einem übermäßigen Herausragen der Antiresonanzelement-Vorformlinge über die übrige Endfläche noch dazu, dass die abgebrochene Endfläche der Antiresonanzelement-Vorformlinge weit unterhalb der übrigen Endfläche im inneren Hohlraum des Glaskörpers verborgen liegt.

Im Sinne der Erfindung ragt die abgebrochene Endfläche der Antiresonanzelement-Vorformlinge maximal bis zur Schnittbreite des umfänglich umlaufenden Einschnitts, bevorzugt aber 0,00 mm, über die Querschnittsfläche des umfänglich umlaufenden Einschnitts $CSA_{cut}$ des Glaskörpers hinaus. Das bedeutet, die Endfläche der Antiresonanzelement-Vorformlinge kann gegebenenfalls so weit über die Ebene hinausragen, die von der Querschnittsfläche des umfänglich umlaufenden Einschnitts $CSA_{cut}$ gebildet wird, wie die Breite des Schneideelements, mit dem der umfänglich umlaufende Einschnitt induziert wurde. Bevorzugt ist es aber, wenn die Endflächen der Antiresonanzelement-Vorformlinge genau in einer Ebene mit der Querschnittsfläche des umfänglich umlaufenden Einschnitts $CSA_{cut}$ des Glaskörpers sind.

Im Sinne der Erfindung ist es außerdem bevorzugt, wenn die Querschnittsfläche des umfänglich umlaufenden Einschnitts $CSA_{cut}$ des Glaskörpers höchstens 1,00 mm, bevorzugt aber 0,00 mm, über die abgetrennte Endfläche der Antiresonanzelement-Vorformlinge hinausragt. Das bedeutet, die Querschnittsfläche des umfänglich umlaufenden Einschnitts $CSA_{cut}$ ragt 1,00 mm, 0,95 mm, 0,90 mm, 0,85 mm, 0,80 mm, 0,75 mm, 0, 70 mm, 0,65 mm, 0,60 mm, 0,55 mm, 0,50 mm, 0,45 mm, 0,40 mm, 0,35 mm, 0,30 mm, 0,25 mm, 0,20 mm, 0,15 mm, 0,10 mm 0,05 mm am bevorzugtesten aber 0,00 mm über die Endfläche der Antiresonanzelement-Vorformlinge hinaus.

Erfindungsgemäß führt der Bruch der Querschnittsfläche $CSA_{ASC}$ zu einer ebenen Endfläche für die Vorform in Solllänge. Das bedeutet, dass die $CSA_{ASC}$ Querschnittsfläche weder übermäßig weit über die Querschnittsfläche des umfänglich umlaufenden Einschnitts $CSA_{cut}$ hinausragt noch, dass die $CSA_{ASC}$ Querschnittsfläche im Verhältnis zur Querschnittsfläche des umfänglich umlaufenden Einschnitts $CSA_{cut}$ weit unterhalb im inneren Hohlraum des Glaskörpers verborgen liegt.

Im Sinne der Erfindung ragt die Querschnittsfläche $CSA_{cut}$ höchstens 1,00 mm, bevorzugt aber 0,00 mm, über die Querschnittsfläche des Restglaskörpers $CSA_{ASC}$ hinausragt. Das bedeutet, die Querschnittsfläche des umfänglich umlaufenden Einschnitts $CSA_{cut}$ ragt 1,00 mm, 0,95 mm, 0,90 mm, 0,85 mm, 0,80 mm, 0,75 mm, 0, 70 mm, 0,65 mm, 0,60 mm, 0,55 mm, 0,50 mm, 0,45 mm, 0,40 mm, 0,35 mm, 0,30 mm, 0,25 mm, 0,20 mm, 0,15 mm, 0,10 mm 0,05 mm am bevorzugtesten aber 0,00 mm über die Querschnittsfläche des Restglaskörpers $CSA_{ASC}$ hinaus.

Im Sinne der Erfindung befindet sich die Querschnittsfläche $CSA_{ASC}$ maximal bis zur Schnittbreite des umfänglich umlaufenden Einschnitts, bevorzugt aber 0,00 mm, oberhalb der Querschnittsfläche des umfänglich umlaufenden Einschnitts $CSA_{cut}$. Das bedeutet, die Querschnittsfläche $CSA_{ASC}$ kann gegebenenfalls so weit über die Ebene hinausragen, die von der Querschnittsfläche des umfänglich umlaufenden Einschnitts $CSA_{cut}$ gebildet wird, wie die Breite des Schneideelements, mit dem der umfänglich umlaufende Einschnitt induziert wurde. Bevorzugt ist es aber, wenn Querschnittsfläche des Restglaskörpers $CSA_{ASC}$ genau in einer Ebene mit der Querschnittsfläche des umfänglich umlaufenden Einschnitts $CSA_{cut}$ des Glaskörpers ist.

Im Sinne des erfindungsgemäßen Verfahrens kann von einem Glaskörper zunächst mittels der erfindungsgemäßen Verfahrensschritte i) und ii) ein endständiges Randstück mit einer Länge von mindestens 15 mm abgetrennt werden. Der so vorbereitete Glaskörper ist dann durch eine Endfläche mit den oben beschriebenen Eigenschaften ausgezeichnet und kann gegebenenfalls bereits als Vorform für die Herstellung einer antiresonanten Hohlkernfaser verwendet werden. Der Glaskörper kann aber auch noch weiter zu einer oder mehreren weiteren Vorformen in Solllänge zugeschnitten werden, die dann zwei Endflächen mit den erfindungsgemäßen Eigenschaften aufweisen. Dieser Schritt kann erfindungsgemäß vorteilhaft sein, wenn der Glaskörper, der zu einer oder mehreren Vorformen verarbeitet wird, zunächst mittels anderer Schneideverfahren abgetrennt wurde und keine Endfläche mit den erfindungsgemäßen Eigenschaften aufweist, also möglicherweise für benötigte Druckanschlüsse unzugänglich ist.

Das entfernte endständige Randstück weist dabei eine Länge von mindestens 15 mm auf, da es lang genug sein muss, um vom Glaskörper oder der Vorform entfernt werden zu können, das heißt es muss groß genug sein, um eine erfindungsgemäße Krafteinwirkung darauf auszuüben. Es kann aber auch noch länger als 15 mm sein.

Das erfindungsgemäße Verfahren ermöglicht es also Vorformen für die Herstellung von antiresonanten Hohlkernfasern in einer Solllänge herzustellen, bei denen qualitativ hochwertige Endflächen erhalten werden, die einem Druckanschluss zugänglich sind. Gleichzeitig ermöglicht das Verfahren das Zuschneiden von Vorformen in Solllänge, ohne dass das Risiko besteht, die inneren Hohlräume des Glaskörpers oder der Antiresonanzelement-Vorformlinge zu verunreinigen. In einer ganz besonders bevorzugten Ausführungsform umfasst das erfindungsgemäße Verfahren die Schritte:

i) wasserdichtes Verschließen der Endfläche, und

ii) umfänglich umlaufendes Einschneiden einer Solltrennstelle auf der Außenglaskörperfläche ohne, dass die Glaskörper-Wandung vollständig durchdrungen wird und ohne, dass die Vorform vollständig abgetrennt wird, mittels einer Säge, und optional

iii) Anbringen mindestens einer zusätzlichen Kerbe entlang der Solltrennstelle, indem mit dem rotierenden Sägeblatt ein Stück das 0,10 bis 2,00 mal tiefer als die Solltrennstelle ist und einer Länge von 0,2 bis 1,7 mal dem Radius des Glaskörpers entspricht, ausgesägt wird, und

iv) Ausüben einer Krafteinwirkung auf den Glaskörper bis zum Abbruch einer Vorform mit Solllänge entlang der Solltrennstellestelle mittels einer Zugspannung.

Die so erhältliche Vorform weist eine Endfläche auf, welche über die zuvor beschriebenen Oberflächenrauheitsparameter verfügt.

**III.** Erzeugnisse

Die mittels des erfindungsgemäßen Verfahrens erhältliche Vorform in Solllänge ist durch die erfindungsgemäß ebene Fläche mit einem üblichen Druckanschluss kompatibel. Es ist für die Herstellung von antiresonanten Hohlkernfasern überaus vorteilhaft, wenn ein Druckanschluss gasdicht an eine Endfläche einer Vorform für die Herstellung einer antiresonanten Hohlkernfaser angebracht werden kann.

Ein gasdichter Anschluss stellt hohe Anforderungen an die Beschaffenheit der Endfläche, an welche der Druckanschluss angeschlossen wird. Die Fläche muss möglichst eben sein, damit der Druckanschluss bündig mit der Vorform verbunden werden kann, sodass ein Über- oder Unterdruck konstant aufrechterhalten werden kann.

Das erfindungsgemäße Verfahren umfassend dem umfänglich umlaufenden Einschnitt in den Glaskörper, ohne dass dieser vollständig durchdrungen wird, ermöglicht die Herstellung von Vorformen mit quantifizierbaren Rauhigkeitsparametern auf den Endflächen. Dadurch wird ein optimaler Zugang für einen Druckanschluss gewährleistet, gleichzeitig weisen die Vorformen hohe Qualität auf, denn sie können mittels des erfindungsgemäßen Verfahrens nicht innseitig verunreinigt werden.

Die Endflächen der erfindungsgemäßen Vorformen in Solllänge umfassen eine Querschnittsfläche des umfänglich umlaufenden Einschnitts ($CSA_{cut}$), die durch den umfänglich umlaufenden Einschnitt getrennt wurde und eine Querschnittsfläche des Restglaskörpers ($CSA_{ASC}$), die durch die Krafteinwirkung getrennt wurde. Außerdem befinden sich im hohlen Innenraum der Vorform in Solllänge Antiresonanzelement-Vorformlinge, die ebenfalls durch die Krafteinwirkung getrennt wurden. Die Endfläche der mittels Bruchs getrennten Antiresonanzelement-Vorformlinge ist damit ebenfalls Bestandteil der Endfläche der Vorform.

Erfindungsgemäße Verformen zeichnen sich insbesondere auch dadurch aus, dass die Querschnittsfläche des umfänglich umlaufenden Einschnitts ($CSA_{cut}$) und die Querschnittsfläche des Restglaskörpers ($CSA_{ASC}$) andere Oberflächeneigenschaften aufweisen. Insbesondere weisen sie andere Rauhigkeitsparameter auf, da $CSA_{cut}$ durch einen Einschnitt erhalten wird, während $CSA_{ASC}$ durch das Abbrechen der Vorform in Solllänge vom Restglaskörper erhalten wird.

Im Sinne der Erfindung weisen die Querschnittsflächen des umfänglich umlaufenden Einschnitts ($CSA_{cut}$) die einen Anteil an der Endfläche der Vorformen in Solllänge haben, die Rauhigkeitsparameter Sa, Sz, Str Spc und Sdr wie zuvor beschrieben auf.

Das bedeutet, die mittlere arithmetische Höhe Sa, die maximale Höhe Sz, das Seitenverhältnis der Oberflächentextur Str, der arithmetische Mittelwert der Spitzenkrümmung Spc und das entwickelte Grenzflächenverhältnis Sdr der Querschnittsfläche des umfänglich umlaufenden Einschnitts ($CSA_{cut}$) weisen bevorzugt dieselben Werte auf, wie zuvor im Sinne des erfindungsgemäßen Verfahrens für die Querschnittsfläche des umfänglich umlaufenden Einschnitts ($CSA_{cut}$) dargestellt. Diese Rauhigkeitsparameter werden erfindungsgemäß mit der 3D Laserscanning-Mikroskopie bestimmt.

Nach der Abtrennung der Vorform in Solllänge in Schritt ii) des erfindungsgemäßen Verfahrens wird eine Vorform in Solllänge mit einer Endfläche erhalten, die durch einen geschnittenen Bereich des Glaskörpers (Querschnittsfläche des umfänglich umlaufenden Einschnitts ($CSA_{cut}$)), einen gebrochenen Bereich des Glaskörpers (Querschnittsfläche des Restglaskörpers ($CSA_{ASC}$)) und eine gebrochene Endfläche der Antiresonanzelement-Vorformlinge gekennzeichnet ist. Erfindungsgemäß ragt keine dieser drei Flächen weit über die anderen Flächen hinaus.

Im Sinne der Erfindung ragt die abgebrochene Endfläche der Antiresonanzelement-Vorformlinge maximal bis zur Schnittbreite des umfänglich umlaufenden Einschnitts, bevorzugt aber 0,00 mm, über die Querschnittsfläche des umfänglich umlaufenden Einschnitts $CSA_{cut}$ des Glaskörpers hinaus, wie zuvor für das erfindungsgemäße Verfahren beschrieben.

Im Sinne der Erfindung ist es außerdem bevorzugt, wenn die Querschnittsfläche des umfänglich umlaufenden Einschnitts $CSA_{cut}$ des Glaskörpers höchstens 1,00 mm, bevorzugt aber 0,00 mm, über die abgetrennte Endfläche der Antiresonanzelement-Vorformlinge hinausragt, wie zuvor für das erfindungsgemäße Verfahren beschrieben.

Im Sinne der Erfindung ragt die Querschnittsfläche $CSA_{cut}$ höchstens 1,00 mm, bevorzugt aber 0,00 mm, über die Querschnittsfläche des Restglaskörpers $CSA_{ASC}$ hinausragt, , wie zuvor für das erfindungsgemäße Verfahren beschrieben.

Im Sinne der Erfindung befindet sich die Querschnittsfläche $CSA_{ASC}$ maximal bis zur Schnittbreite des umfänglich umlaufenden Einschnitts, bevorzugt aber 0,00 mm, oberhalb der Querschnittsfläche des umfänglich umlaufenden Einschnitts $CSA_{cut}$, wie zuvor für das erfindungsgemäße Verfahren beschrieben.

Die so durch das erfindungsgemäße Verfahren erreichbare ebene Beschaffenheit ermöglicht es, einen Druckanschluss mit der Vorform in Solllänge zu verbinden und zwar auf eine Weise, sodass der Anschluss gasdicht erfolgt.

**BEISPIELE**

**Beispiel** 1 - **Zuschneiden von Glaskörpern unterschiedlicher Stärke**

Die folgende Tabelle gibt eine Reihe von Einschnittparametern wieder, die für die Herstellung von Vorformen in Solllänge verwendet worden sind. In den gezeigten Beispielen wurden die Zuschnitte stets kreisrund ausgeführt. Es ist allerdings ebenfalls erfindungsgemäß, wenn die Zuschnitte polygonale Formen, oder Formen von Polygonen mit abgerundeten Kanten haben.

Tabelle 1. Außen- und Innendurchmesser der verarbeiteten Vorformen ($OD_{pre}$, $ID_{pre}$) Außendurchmesser des Restglaskörpers (OASC), Restglaskörper-Wandungsstärke ($d_{ASC}$) und Einschnitttiefe ($d_{cut}$), Querschnittsfläche des Restglaskörpers ($CSA_{ASC}$), die Querschnittsfläche des umfänglich umlaufenden Einschnitts ($CSA_{cut}$) und die Einschnitttiefe einer möglichen Kerbe ($d_{Kerbe}$).

| OD [mm] | ID [mm] | ØASC [mm] | $d_{ASC}$ [mm] | $d_{cut}$ [mm] | $CSA_{ASC}$ [mm²] | $CSA_{cut}$ [mm²] | $\frac{d_{cut}}{d_{ASC}}$ | $\frac{CSA_{CUT}}{CSA_{ASC}}$ | $d_{Kerbe}$ [mm] | $\frac{d_{Kerbe}}{d_{cut}}$ |
|---|---|---|---|---|---|---|---|---|---|---|
| 25 | 8 | 14 | 3,00 | 5,50 | 104 | 337 | 1,8 | 3,3 | 1 | 0,18 |
| 30 | 10 | 16 | 3,00 | 7,00 | 123 | 506 | 2,3 | 4,1 | 0,2 | 0,03 |
| 35 | 10 | 15 | 2,50 | 10,00 | 98 | 785 | 4,0 | 8,0 | 0 | 0,00 |
| 35 | 15 | 25 | 5,00 | 5,00 | 314 | 471 | 1,0 | 1,5 | 2 | 0,40 |
| 40 | 14,0 | 20 | 3,00 | 10,00 | 160 | 942 | 3,3 | 5,9 | 1 | 0,10 |
| 40 | 16,0 | 28 | 6,00 | 6,00 | 415 | 641 | 1,0 | 1,5 | 3 | 0,50 |
| 60 | 20,0 | 28 | 4,00 | 16,00 | 302 | 2212 | 4,0 | 7,3 | 1 | 0,06 |
| 60 | 24,0 | 37 | 6,50 | 11,50 | 623 | 1752 | 1,8 | 2,8 | 4 | 0,35 |
| 80 | 22,0 | 28 | 3,00 | 26,00 | 236 | 4411 | 8,7 | 18,7 | 0,5 | 0,02 |
| 80 | 30,0 | 45 | 7,50 | 17,50 | 884 | 3436 | 2,3 | 3,9 | 3 | 0,17 |
| 90 | 28,0 | 40 | 6,00 | 25,00 | 641 | 5105 | 4,2 | 8,0 | 3 | 0,12 |
| 90 | 33,0 | 52 | 9,50 | 19,00 | 1268 | 4238 | 2,0 | 3,3 | 6 | 0,32 |
| 120 | 35,0 | 45 | 5,00 | 37,50 | 628 | 9719 | 7,5 | 15,5 | 2 | 0,05 |
| 120 | 50,0 | 70 | 10,00 | 25,00 | 1885 | 7461 | 2,5 | 4,0 | 5 | 0,20 |
| 150 | 42,0 | 55 | 6,50 | 47,50 | 990 | 15296 | 7,3 | 15,4 | 4 | 0,08 |
| 150 | 55,0 | 78 | 11,50 | 36,00 | 2403 | 12893 | 3,1 | 5,4 | 4 | 0,11 |
| 200 | 55,0 | 70 | 7,50 | 65,00 | 1473 | 27567 | 8,7 | 18,7 | 5 | 0,08 |
| 200 | 70,0 | 95 | 12,50 | 52,50 | 3240 | 24328 | 4,2 | 7,5 | 3 | 0,06 |

Die Tabelle zeigt eine Reihe von Glaskörper Geometrien die gemäß dem erfindungsgemäßen Verfahren zu Vorformen in Solllänge für die weitere Verarbeitung zu antiresonanten Hohlkernfasern zugeschnitten wurden. Es wird verdeutlicht, dass das erfindungsgemäße Verfahren für schmalere genauso wie für besonders breite Glaskörper geeignet ist.

**Beispiel** 2 - **Rauhigkeitsbestimmung an den Schnittflächen von 7 Proben**

Mittels der 3D-Lasermikroskopie wurden die Rauhigkeitsparameter Sa, Sz, Str, Spc und sdr für 7 ausgewählte Vorformen in Solllänge bestimmt. Die folgende Tabelle gibt die Ergebnisse wieder.

Tabelle 2. Rauhigkeitsparameter welche für 7 Schnittflächen bestimmt wurden: die mittlere arithmetische Höhe Sa, die maximale Höhe Sz, das Seitenverhältnis der Oberflächentextur Str, der arithmetische Mittelwert der Spitzenkrümmung Spc und das entwickelte Grenzflächenverhältnis Sdr.

|  | Sa [$\mu$m] | Sz [$\mu$m] | Str | Spc [1/mm] | sdr |
|---|---|---|---|---|---|
| Probe 1 | 0,398 | 7,485 | 0,786 | 1472,333 | 0,1932 |
| Probe 2 | 0,675 | 12,404 | 0,122 | 1807,369 | 0,3008 |
| Probe 3 | 0,533 | 12,2 | 0,578 | 1471,943 | 0,2135 |
| Probe 4 | 0,569 | 12,498 | 0,196 | 1737,275 | 0,2828 |
| Probe 5 | 0,542 | 12,569 | 0,269 | 1498,32 | 0,198 |
| Probe 6 | 0,47 | 11,685 | 0,7 | 1835,071 | 0,3069 |
| Probe 7 | 0,915 | 24,83 | 0,314 | 2032,305 | 0,3823 |

Die Proben korrespondieren mit Glaskörpern, welche mit einem rotierenden Sägeblatt zugeschnitten worden sind.

**Beispiel 3** - **Qualitative Beschreibung möglicher Arbeitsschritte eines erfindungsgemäßen Verfahrens**

Ein Glaskörper, der zu Vorformen für die Herstellung von antiresonanten Hohlkernfasern verarbeitet werden kann, wurde vorgelegt. Die Endfläche des Glaskörpers wurde wasserdicht abgeschlossen, sodass das Innere der Vorform nicht durch Flüssigkeit und/oder Schneidstaub verunreinigt werden konnte.

Als Schneidevorrichtung wurde eine geeignete Säge mit einem rotierenden Sägeblatt ausgewählt. Die feststehende Schneidevorrichtung wurde so justiert, dass sie den Einschnitt entsprechend der ausgewählten Einschnitttiefe für die Vorform ausführen konnte. Daraufhin wurde der Glaskörper in einer geeigneten Haltevorrichtung so positioniert, dass er kontinuierlich in Solllängen-Abständen zur Einschnittposition für das Auftragen der Solltrennstelle bewegt werden konnte.

Nachdem der Glaskörper so positioniert wurde, wurde das rotierende Sägeblatt langsam auf die Solltrennstelle zu bewegt. Gleichzeitig wurde der Glaskörper langsam entgegen der Rotationsrichtung des Sägeblatts bewegt. Das Sägeblatt wurde bis zur zuvor eingestellten Einschnitttiefe abgesenkt und der Glaskörper mehrfach um die eigene Achse rotiert.

Der Glaskörper, auf dem nun eine kreisrunde Solltrennstelle aufgetragen war, wurde aus der Halterung entnommen und die Solltrennstelle wurde mittels einer wässrigen Alkohollösung und Druckluft/Stickstoffspülung von Verunreinigungen befreit. Eine Kraftausübung auf die Vorform in Solllänge führte zu deren Bruch vom Restglaskörper.

**FIGURENBESCHREIBUNG**

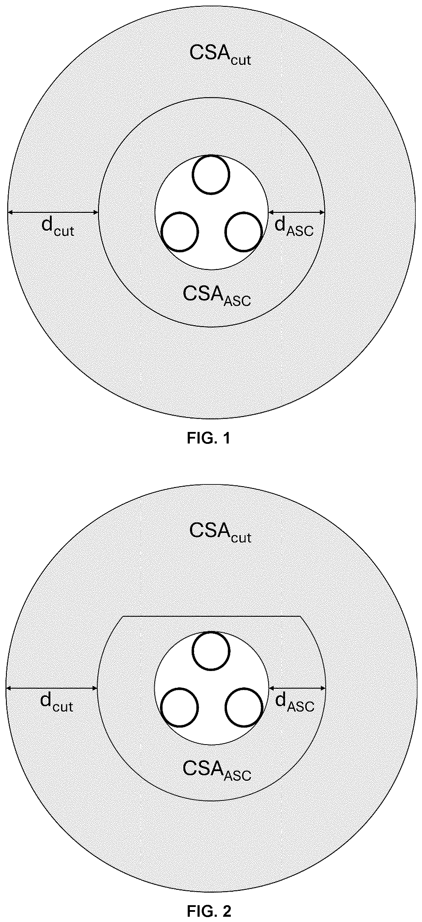

**FIGUR 1**  Schematischer Querschnitt der Endfläche einer erfindungsgemäßen Vorform, worin der umfänglich umlaufende Einschnitt ein kreisrunder Einschnitt ist. Die Flächen $CSA_{cut}$ und $CSA_{ASC}$ sind bezeichnet worden. Es sind Einschnitttiefe $d_{cut}$ und die Restglaskörper-Wandungsstärke $d_{ASC}$ aufgezeigt. Zentral befindet sich eine schematische Anordnung von Antiresonanzelement-Vorformlingen, deren Hohlraum und der übrige Hohlraum sind farblos.

**FIGUR 2**  Schematischer Querschnitt der Endfläche einer erfindungsgemäßen Vorform, worin der umfänglich umlaufende Einschnitt nicht gleichförmig ist. Die Flächen $CSA_{cut}$ und $CSA_{ASC}$ sind bezeichnet worden. Es sind Einschnitttiefe $d_{cut}$ und die Restglaskörper-Wandungsstärke $d_{ASC}$ aufgezeigt. Sie unterscheiden sich jeweils an verschiedenen Stellen ihrer korrespondierenden Flächen. Zentral befindet sich eine schematische Anordnung von Antiresonanzelement-Vorformlingen, deren Hohlraum und der übrige Hohlraum sind farblos.

**Patentansprüche**

**1.**  Verfahren zur Herstellung von Vorformen für antiresonante Hohlkernfasern die

a) einen Glaskörper mit Hohlstrukturen, mit einer Glaskörper-Innenbohrung und einer Glaskörper-Längsachse, entlang der sich eine von einer Innenglaskörperfläche und einer Außenglaskörperfläche begrenzte Glaskörper-Wandung erstreckt umfassen, und

b) Antiresonanzelement-Vorformlinge umfassen, und worin

Glaskörper und Antiresonanzelement-Vorformling anteilig oder vollständig aneinander fixiert sind, entsprechend einer Solllänge, umfassend die mindestens einmalig ausgeführten Verfahrensschritte:

i) umfänglich umlaufendes Einschneiden einer Solltrennstelle auf der Außenglaskörperfläche ohne, dass die Glaskörper-Wandung vollständig durchdrungen wird und ohne, dass die Vorform vollständig abgetrennt wird, mittels einer geeigneten Schneidevorrichtung, und

ii) Ausüben einer Krafteinwirkung auf den Glaskörper bis zum Abbruch einer Vorform mit Solllänge auf die Solltrennstelle.

2. Verfahren gemäß Anspruch 1, **dadurch gekennzeichnet, dass** der Glaskörper während des Zuschneidens rotiert wird, oder dass nacheinander rotiert und eingeschnitten wird.

3. Verfahren gemäß Anspruch 1 und 2, **dadurch gekennzeichnet, dass** Schneidevorrichtungen mechanische und hochenergetische Schneidevorrichtungen umfassen und mechanische Schneidevorrichtungen bevorzugt sind.

4. Verfahren gemäß Anspruch 1 bis 3, **dadurch gekennzeichnet, dass** der umfänglich umlaufende Einschnitt in einem Winkel von 85° bis 95°, bevorzugt in einem Winkel von 90° zu der Glaskörper-Längsachse erfolgt.

5. Verfahren gemäß Anspruch 1 bis 4, **dadurch gekennzeichnet, dass** der umfänglich umlaufende Einschnitt in einem Restglaskörper resultiert, der durch eine Restglaskörper-Wandungsstärke ($d_{ASC}$ *distance annular-saw-cut* [mm]) und eine Einschnitttiefe des umfänglich umlaufenden Einschnitts ($d_{cut}$ *distance cut* [mm]) gekennzeichnet ist und **dadurch gekennzeichnet, dass** das Verhältnis zwischen der Einschnitttiefe des umfänglich umlaufenden Einschnitts $d_{cut}$ und der Restglaskörper-Wandungsstärke $d_{ASC}$ zwischen 15,0 und 0,1, bevorzugt zwischen 10,0 und 0,5, beträgt.

6. Verfahren gemäß Anspruch 1 bis 5, **dadurch gekennzeichnet, dass** der umfänglich umlaufende Einschnitt in einem Restglaskörper resultiert, der durch eine Querschnittsfläche des Restglaskörpers $CSA_{ASC}$ (*Cross-Section-Area Annular-Saw-Cut* [mm$^2$]) und eine Querschnittsfläche des umfänglich umlaufenden Einschnitts $CSA_{cut}$ (*Cross-Section-Area cut* [mm$^2$]) gekennzeichnet ist und **dadurch gekennzeichnet, dass** das Verhältnis zwischen der Querschnittsfläche des umfänglich umlaufenden Einschnitts $CSA_{cut}$ (*Cross-Section-Area cut* [mm$^2$]) und der Querschnittsfläche des Restglaskörpers $CSA_{ASC}$ (*Cross-Section-Area Annular-Saw-Cut* [mm$^2$]) zwischen 35,0 und 0,5, bevorzugt zwischen 20,0 und 0,5 beträgt.

7. Verfahren gemäß Anspruch 1 bis 6, **dadurch gekennzeichnet, dass** von dem Glaskörper unter Anwendung der Verfahrensschritte i) und ii) ein endständiges Randstück mit einer Länge von mindestens 15 mm entfernt wird.

8. Verfahren gemäß Anspruch 1 bis 7, **dadurch gekennzeichnet, dass** die folgenden Verfahrensschritte mindestens einmalig ausgeführt werden:

i) wasserdichtes und/oder staubdichtes Verschließen der Endfläche, und

ii) umfänglich umlaufendes Einschneiden einer Solltrennstelle auf der Außenglaskörperfläche ohne, dass die Glaskörper-Wandung vollständig durchdrungen wird und ohne, dass die Vorform vollständig abgetrennt wird, mittels einer Säge, und optional

iii) Anbringen mindestens einer zusätzlichen Kerbe entlang der Solltrennstelle, indem mit dem rotierenden Sägeblatt ein Stück das 0,01 bis 1,50 mal tiefer als die Solltrennstelle ist und einer 0,2 bis 1,7 mal dem Radius des Glaskörpers entspricht, ausgesägt wird, und

iv) Ausüben einer Krafteinwirkung auf den Glaskörper bis zum Abbruch einer Vorform mit Solllänge entlang der Solltrennstelle mittels einer Zugspannung oder einer Torsionskraft.

9. Vorform in Solllänge für die Herstellung einer antiresonanten Hohlkernfaser, **dadurch gekennzeichnet, dass** sie mindestens eine mit einem Druckanschluss kompatible Endfläche aufweist, die eine Querschnittsfläche eines umfänglich umlaufenden Einschnitts $CSA_{cut}$ (*Cross-Section-Area cut* [mm$^2$]), eine Querschnittsfläche eines Restglaskörpers $CSA_{ASC}$ (*Cross-Section-Area Annular-Saw-Cut* [mm$^2$]) und eine Endfläche von Antiresonanzelement-Vorformlingen umfasst.

**10.** Vorform nach Anspruch 9, **dadurch gekennzeichnet, dass** die Oberflächeneigenschaften der Querschnittsfläche des umfänglich umlaufenden Einschnitts $CSA_{cut}$ und die Oberflächenbeschaffenheit der Querschnittsfläche des Restglaskörpers $CSA_{ASC}$ unterschiedlich sind.

**11.** Vorform gemäß Anspruch 9 und 10, **dadurch gekennzeichnet, dass** sie mindestens eines der folgenden Merkmale aufweist:

      eine Querschnittsfläche $CSA_{cut}$ mit
einer mittleren arithmetischen Höhe Sa, welche nicht mehr als 2,000 μm beträgt;
einer maximalen Höhe Sz, welche nicht mehr als 25,000 μm beträgt;
ein Seitenverhältnis der Oberflächentextur *Str,* welches nicht mehr als 0,400 beträgt;
einen arithmetischen Mittelwert der Spitzenkrümmung *Spc,* welcher nicht weniger als 1000,000 mm$^{-1}$ beträgt;
ein entwickeltes Grenzflächenverhältnis Sdr, welches nicht mehr als 0,3000 beträgt.

**12.** Vorform gemäß Anspruch 9 bis 11, **dadurch gekennzeichnet, dass** sie mindestens eines der folgenden Merkmale aufweist:

      die Endfläche der Antiresonanzelement-Vorformlinge ragt höchstens bis zur Schnittbreite des umfänglich umlaufenden Einschnitts, bevorzugt aber 0,00 mm über die Querschnittsfläche des umfänglich umlaufenden Einschnitts $CSA_{cut}$ des Glaskörpers hinaus;
die Querschnittsfläche des umfänglich umlaufenden Einschnitts $CSA_{cut}$ des Glaskörpers ragt höchstens 1,00 mm, bevorzugt aber 0,00 mm, über die Endfläche der Antiresonanzelement-Vorformlinge hinaus.

**13.** Vorform gemäß Anspruch 9 bis 12, **dadurch gekennzeichnet, dass** sie mindestens eines der folgenden Merkmale aufweist:

      die Querschnittsfläche des umfänglich umlaufenden Einschnitts $CSA_{cut}$ ragt höchstens 1,00 mm, bevorzugt aber 0,00 mm, über Querschnittsfläche der Restglaskörpers $CSA_{ASC}$ hinaus;
die Querschnittsfläche der Restglaskörpers $CSA_{ASC}$ ragt höchstens bis zur Schnittbreite des umfänglich umlaufenden Einschnitts, bevorzugt aber 0,00 mm über die Querschnittsfläche des umfänglich umlaufenden Einschnitts $CSA_{cut}$ hinaus.

**14.** Vorform gemäß Anspruch 9 bis 13, erhältlich durch ein Verfahren gemäß Anspruch 1 bis 8.

FIG. 1

FIG. 2

Europäisches
Patentamt

European
Patent Office

Office européen
des brevets

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | WO 2021/123738 A1 (LUMENISITY LTD [GB]) 24. Juni 2021 (2021-06-24) | 9-14 | INV. C03B33/06 |
| Y | * Seite 4, Zeile 32 - Seite 5, Zeile 4; | 1-7 | C03B37/012 |
| A | Abbildungen 3C,10 * | 8 | |
| | * Seite 15, Zeilen 18-36 * | | |
| | * Seite 16, Zeilen 3-7 * | | |
| | * Seite 18, Zeilen 7-12 * | | |
| | ----- | | |
| Y | CN 116 730 603 A (ANHUI GUANGZHI TECHNOLOGY CO LTD) 12. September 2023 (2023-09-12) * Ansprüche 7,8; Abbildungen * | 1-7 | |
| | ----- | | |
| Y | WO 98/00266 A1 (CALP SPA [IT]; MUZZI ALESSIO [IT] ET AL.) 8. Januar 1998 (1998-01-08) * Seite 3, Zeilen 19-29; Ansprüche 1,4 * | 1-7 | |
| | ----- | | |
| A,D | JP 2009 126757 A (TOSOH QUARTZ CORP) 11. Juni 2009 (2009-06-11) * Absätze [0037] - [0050]; Ansprüche; Abbildungen * | 1-14 | |
| | ----- | | |

| RECHERCHIERTE SACHGEBIETE (IPC) |
|---|
| C03B B28D |

Der vorliegende Recherchenbericht wurde für alle Patentansprüche erstellt

| Recherchenort | Abschlußdatum der Recherche | Prüfer |
|---|---|---|
| Den Haag | 27. Februar 2025 | Creux, Sophie |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument
.........................................................................................
& : Mitglied der gleichen Patentfamilie, übereinstimmendes
  Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 20 4003

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-02-2025

| Im Recherchenbericht angeführtes Patentdokument | Datum der Veröffentlichung | Mitglied(er) der Patentfamilie | Datum der Veröffentlichung |
|---|---|---|---|
| WO 2021123738 A1 | 24-06-2021 | CN 114829312 A | 29-07-2022 |
| | | EP 4077227 A1 | 26-10-2022 |
| | | JP 2023506929 A | 20-02-2023 |
| | | US 2023011708 A1 | 12-01-2023 |
| | | WO 2021123738 A1 | 24-06-2021 |
| CN 116730603 A | 12-09-2023 | KEINE | |
| WO 9800266 A1 | 08-01-1998 | AT E190539 T1 | 15-04-2000 |
| | | AU 725750 B2 | 19-10-2000 |
| | | CN 1224377 A | 28-07-1999 |
| | | CZ 293702 B6 | 14-07-2004 |
| | | DE 69607221 T2 | 04-01-2001 |
| | | DK 0914229 T3 | 21-08-2000 |
| | | EP 0914229 A1 | 12-05-1999 |
| | | ES 2146025 T3 | 16-07-2000 |
| | | IT 1284082 B1 | 08-05-1998 |
| | | JP 3453389 B2 | 06-10-2003 |
| | | JP 2000513318 A | 10-10-2000 |
| | | KR 20000022244 A | 25-04-2000 |
| | | PT 914229 E | 29-09-2000 |
| | | TR 199802708 T2 | 22-03-1999 |
| | | TW 317559 B | 11-10-1997 |
| | | US 6204472 B1 | 20-03-2001 |
| | | WO 9800266 A1 | 08-01-1998 |
| JP 2009126757 A | 11-06-2009 | JP 5064184 B2 | 31-10-2012 |
| | | JP 2009126757 A | 11-06-2009 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2009167040 A
- JP 2009149482 A
- US 20080202298 A
- JP 2009126757 A
- WO 2021123738 A
- WO 2014048004 A
- JP 2018080091 A
- WO 2016114779 A
- JP 2012025594 A
- DE 102006012582 A1
- WO 03029155 A
- JP H11343134 A
- WO 2017186246 A
- WO 2021110338 A